(19) Europäisches Patentamt
European Patent Office
Office européen des brevets

(11) **EP 4 299 639 A1**

(12) **EUROPEAN PATENT APPLICATION**
published in accordance with Art. 153(4) EPC

(43) Date of publication:
**03.01.2024 Bulletin 2024/01**

(21) Application number: **22759520.4**

(22) Date of filing: **18.02.2022**

(51) International Patent Classification (IPC):
***C08F 220/10*** *(2006.01)*

(52) Cooperative Patent Classification (CPC):
**C08F 220/10**

(86) International application number:
**PCT/JP2022/006639**

(87) International publication number:
**WO 2022/181484 (01.09.2022 Gazette 2022/35)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **26.02.2021 JP 2021029446**

(71) Applicant: **Zeon Corporation
Tokyo 100-8246 (JP)**

(72) Inventor: **WATANABE, Masashi
Tokyo 100-8246 (JP)**

(74) Representative: **Beckmann, Claus
Kraus & Weisert
Patentanwälte PartGmbB
Thomas-Wimmer-Ring 15
80539 München (DE)**

(54) **HOLLOW PARTICLE**

(57) To provide hollow particles having a high void ratio and excellent pressure resistance. Hollow particles which comprise a shell containing a resin and a hollow portion surrounded by the shell, wherein a void ratio is 60% or more; wherein a volume average particle diameter is from 10 um to 50 um; wherein the shell contains, as the resin, a polymer in which from 70 parts by mass to 100 parts by mass of a crosslinkable monomer unit is contained in 100 parts by mass of all monomer units, and the crosslinkable monomer unit contains a bifunctional crosslinkable monomer unit derived from a bifunctional crosslinkable monomer and a trifunctional or higher-functional crosslinkable monomer unit derived from a trifunctional or higher-functional crosslinkable monomer; and wherein, when observed in plan view, a percentage of particles having a dent with a size of 5% to 50% of the particle diameter, is 10% or less.

FIG. 1

EP 4 299 639 A1

**Description**

Technical Field

The present disclosure relates to hollow particles.

Background Art

Hollow particles (hollow resin particles) are particles each of which has a hollow in its interior, and they can scatter light well and can reduce light transmissivity as compared to solid particles in which their interiors are practically filled with resin; hence, hollow particles are widely used in the applications of, for example, aqueous coating materials and paper coating compositions, as organic pigments and masking agents excellent in optical properties such as opacity and whiteness. Also, in recent years, hollow particles are used as weight reducing materials, heat insulation materials or the like for resins and coating materials, which are used in various kinds of fields such as the automotive field, the electronic field, the electric field and the architecture field.

To enhance the effects of various kinds of compositions and molded bodies containing hollow particles, such as weight reduction, heat insulation, opacity and whitening, it is desirable that hollow particles can maintain a high void ratio even when they are mixed and kneaded with other materials and even when the mixture is molded after the mixing and kneading. However, when the void ratio of hollow particles is increased, the shell thickness of the hollow particles decreases and makes the hollow particles more likely to collapse. Accordingly, there is a demand for hollow particles which have a high void ratio and which are less likely to collapse.

It is also desirable that hollow particles are spherical. Patent Literatures 1 to 4 disclose methods for obtaining spherical hollow particles using a polymerization method.

Patent Literature 1 mentions that hollow resin fine particles having a spherical shape can be produced by a method including the following processes: a process of preparing micro-encapsulated type polymer particles including an organic solvent, by using a reactive monomer having a radically polymerizable functional group and cross-linkable functional group, and radically polymerizing the monomer, followed by a process of crosslinking resins constituting the micro-encapsulated type polymer particles by use of a crosslinking agent. The hollow resin fine particles mentioned in Patent Literature 1 are added to antireflection films for displays. The average particle diameter of the fine particles is set to 100 nm or less to make the fine particles applicable to antireflection films.

Patent Literature 2 mentions hollow resin particles obtained by a method in which a crosslinkable monomer and at least one monomer selected from the group consisting of a monovinyl monomer and a hydrophilic monomer are used in combination at a specific ratio and an oil-soluble polymerization initiator is used as a polymerization initiator; moreover, Patent Literature 2 mentions that since the obtained hollow resin particles do not collapse, the void ratio of the hollow resin particles can be kept high. Patent Literature 2 mentions that the crosslinkable monomer is preferably a bifunctional crosslinkable monomer.

Patent Literature 3 mentions that hollow resin particles which have a high spherical ratio and can increase a hollow ratio while securing strength, are obtained by using a polyfunctional monomer having three or more polymerizable double bonds as a crosslinkable monomer. Patent Literature 3 also mentions that the crosslinkable monomer is preferably free of a bifunctional monomer and composed of a trifunctional or higher-functional monomer.

Patent Literature 4 mentions that hollow resin particles excellent in void ratio and compression strength, are obtained by performing suspension polymerization using a monomer composition having a large content ratio of a crosslinkable monomer, and removing a hydrocarbon solvent from precursor particles in short time by replacing an aqueous medium contained in a suspension liquid subjected to polymerization reaction with a polar solvent. Patent Literature 4 also mentions that the crosslinkable monomer is preferably a bifunctional crosslinkable monomer.

Citation List

Patent Literatures

Patent Literature 1: Japanese Patent Application Laid-Open (JP-A) No. 2006-089648
Patent Literature 2: International Publication No. WO2019/26899
Patent Literature 3: JP-A No. 2020-033503
Patent Literature 4: JP-A No. 2020-132820

Summary of Invention

Technical Problem

As the void ratio of hollow particles increases, the pressure resistance thereof tends to decrease since the shell thickness thereof decreases. However, hollow particles having a large particle diameter are expected to exert excellent pressure resistance while having a high void ratio, since the shell thickness is not too thin even when the void ratio increases. However, in the case of hollow particles having a volume average particle diameter of 10 um or more, the pressure resistance may decrease even when the shell thickness is sufficient.

An object of the present disclosure is to provide hollow particles having a high void ratio and excellent pressure resistance.

Solution to Problem

The inventor of the present disclosure found that hollow particles having a volume average particle diameter of 10 um or more exert, even when the void ratio of the particles is increased to 60% or more, excellent pressure resistance in the following cases: the polymer forming the shell of the particles contains large amounts of crosslinkable monomer units; the crosslinkable monomer units are derived from a bifunctional crosslinkable monomer and a trifunctional or higher-functional crosslinkable monomer; and the surface of the shell is smooth.

The hollow particles of the present disclosure are hollow particles which comprise a shell containing a resin and a hollow portion surrounded by the shell,

wherein a void ratio is 60% or more;
wherein a volume average particle diameter is from 10 um to 50 um;
wherein the shell contains, as the resin, a polymer in which from 70 parts by mass to 100 parts by mass of a crosslinkable monomer unit is contained in 100 parts by mass of all monomer units, and the crosslinkable monomer unit contains a bifunctional crosslinkable monomer unit derived from a bifunctional crosslinkable monomer and a trifunctional or higher-functional crosslinkable monomer unit derived from a trifunctional or higher-functional crosslinkable monomer; and
wherein, when observed in plan view, a percentage of particles having a dent with a size of 5% to 50% of the particle diameter, is 10% or less.

In the hollow particles of the present disclosure, a content of the bifunctional crosslinkable monomer unit in 100 parts by mass of all monomer units of the polymer, is preferably from 60 parts by mass to 95 parts by mass.

In the hollow particles of the present disclosure, a content of the trifunctional or higher-functional crosslinkable monomer unit in 100 parts by mass of all monomer units of the polymer, is preferably from 5 parts by mass to 40 parts by mass.

In the hollow particles of the present disclosure, the trifunctional or higher-functional crosslinkable monomer unit may be a crosslinkable monomer unit derived from a methacrylic crosslinkable monomer containing, as a polymerizable functional group, a methacryloyl group.

In the hollow particles of the present disclosure, a thickness of the shell is preferably from 0.20 um to 4.00 um.

Advantageous Effects of Invention

According to the present disclosure, hollow particles having a high void ratio and excellent pressure resistance are provided.

Brief Description of Drawings

In the accompanying drawings,

FIG. 1 is a diagram illustrating an example of the method for producing the hollow particles of the present disclosure, and
FIG. 2 is a schematic diagram showing an embodiment of a suspension in a suspension step.

Description of Embodiments

In the present disclosure, "A to B" in a numerical range is used to describe a range in which the numerical value A is included as the lower limit value and the numerical value B is included as the upper limit value.

Also in the present disclosure, (meth)acrylate means each of acrylate and methacrylate; (meth)acryl means each of acryl and methacryl; and (meth)acryloyl means each of acryloyl and methacryloyl.

Also in the present disclosure, the term "polymerizable monomer" means a compound having an addition-polymerizable functional group (in the present disclosure, it may be simply referred to as a "polymerizable functional group"). Also in the present disclosure, as the polymerizable monomer, a compound having an ethylenically unsaturated bond as the addition-polymerizable functional group, is generally used.

There are two kinds of polymerizable monomers: a non-crosslinkable monomer and a crosslinkable monomer. The non-crosslinkable monomer is a polymerizable monomer which has only one polymerizable functional group, and the crosslinkable monomer is a polymerizable monomer which has two or more polymerizable functional groups and which forms crosslinking in resin by a polymerization reaction.


1. Hollow particles


The hollow particles of the present disclosure are hollow particles which comprise a shell containing a resin and a hollow portion surrounded by the shell,

> wherein a void ratio is 60% or more;
> wherein a volume average particle diameter is from 10 um to 50 um;
> wherein the shell contains, as the resin, a polymer in which from 70 parts by mass to 100 parts by mass of a crosslinkable monomer unit is contained in 100 parts by mass of all monomer units, and the crosslinkable monomer unit contains a bifunctional crosslinkable monomer unit derived from a bifunctional crosslinkable monomer and a trifunctional or higher-functional crosslinkable monomer unit derived from a trifunctional or higher-functional crosslinkable monomer; and
> wherein, when observed in plan view, a percentage of particles having a dent with a size of 5% to 50% of the particle diameter, is 10% or less.


The hollow particles of the present disclosure are particles which comprise a resin-containing shell (outer shell) and a hollow portion surrounded by the shell.

In the present disclosure, the term "hollow portion" means a hollow space clearly distinguished from the shell of hollow particles formed from a resin material. The shell of the hollow particles may have a porous structure. In this case, the hollow portion has a size that can be clearly distinguished from many minute spaces uniformly dispersed in the porous structure.

The hollow portion of the hollow particles can be determined by, for example, SEM observation of a cross section of the particles or TEM observation of the particles as they are.

The hollow portion of the hollow particles may be filled with gas such as air, may be in a reduced pressure state close to vacuum, or may contain a solvent.

The pressure resistance of the hollow particles increases as the shell thickness increases. Accordingly, the hollow particles having a large particle diameter are expected to balance a high void ratio and excellent pressure resistance. However, the pressure resistance of conventional hollow particles having a volume average particle diameter of 10 um or more may decrease even though they have a sufficient shell thickness.

For example, as described in Patent Literatures 2 and 4, when hollow particles having a volume average particle diameter of 10 um or more are produced by using, as a crosslinkable monomer, a bifunctional crosslinkable monomer only, the following problem occurs: as with the below-described Comparative Example 6, the particles are dented, and the pressure resistance of the particles remarkably decreases.

Meanwhile, as described in Patent Literature 3, when hollow particles having a volume average particle diameter of 10 um or more are produced by using, as a crosslinkable monomer, a trifunctional crosslinkable monomer only, the following problem occurs: as with the below-described Comparative Example 5, since the produced particles obtain a shell having pores or communication holes, resin enters the interior of the particles when mixing and kneading a resin composition containing the hollow particles or injection molding of the resin composition. Accordingly, the weight reduction of the resin composition or the molded product thereof cannot be achieved.

When hollow particles having a volume average particle diameter of 10 um or more are produced by the method described in Patent Literature 1, since the crosslinking agent is water-soluble agent, the following problem occurs: the crosslinking reaction does not proceed sufficiently in the shell, and the pressure resistance of the hollow particles is not sufficiently increased.

The inventor of the present disclosure found that the shell of the hollow particles having a volume average particle diameter of 10 um or more is likely to have a dent, and when the shell has a dent, the pressure resistance of the hollow particles remarkably decreases. It is presumed that when the shell of the hollow particles has a dent and external stress is applied to the hollow particles, the pressure concentrates at the dent and crack of the shell is likely to start from the dent.

On the other hand, the hollow particles of the present disclosure exert excellent pressure resistance, while they have a volume average particle diameter of from 10 um to 50 um. Since the hollow particles of the present disclosure have a volume average particle diameter of from 10 um to 50 $\mu$m, they have a sufficient shell thickness even though the void ratio is 60% or more and high. Also, the hollow particles of the present disclosure have a crosslinking structure that is excellent in strength, since the shell-forming polymer contains from 70 parts by mass to 100 parts by mass of a crosslinkable monomer unit in 100 parts by mass of all monomer units, and the crosslinkable monomer unit contains a bifunctional crosslinkable monomer unit and a trifunctional or higher-functional crosslinkable monomer unit. Also in the hollow particles of the present disclosure, a decrease in pressure resistance caused by the dent of the shell is suppressed, because, when observed in plan view, the percentage of particles having a dent with a size of 5% to 50% of the particle diameter, is 10% or less, and the shell surface is smooth. Accordingly, the hollow particles of the present disclosure are hollow particles such that the shell is excellent in strength and sufficient in thickness and a decrease in pressure resistance caused by the dent is suppressed. Accordingly, the hollow particles of the present disclosure are hollow particles which can exert excellent pressure resistance and can balance a high void ratio and excellent pressure resistance.

The void ratio of the hollow particles of the present disclosure is 60% or more, and preferably 65% or more. When the void ratio is equal to or more than the lower limit value, the hollow particles obtain excellent lightness in weight, excellent heat resistance and excellent heat insulation properties. The upper limit of the void ratio of the hollow particles of the present disclosure is not particularly limited. From the viewpoint of suppressing a decrease in the strength of the hollow particles and increasing the pressure resistance, the upper limit is preferably 90% or less, more preferably 85% or less, and still more preferably 80% or less.

The void ratio of the hollow particles of the present disclosure can be calculated from the apparent density $D_1$ and true density $D_0$ of the hollow particles.

A method for measuring the apparent density $D_1$ of the hollow particles is as follows. First, approximately 30 $cm^3$ of the hollow particles are introduced into a measuring flask with a volume of 100 $cm^3$, and the mass of the introduced hollow particles is precisely weighed. Next, the measuring flask in which the hollow particles are introduced, is precisely filled with isopropanol up to the marked line while care is taken so that air bubbles do not get in. The mass of the isopropanol added to the measuring flask is precisely weighed, and the apparent density $D_1$ (g/$cm^3$) of the hollow particles is calculated by the following formula (I).

$$\text{Apparent density } D_1 = [\text{Mass of the hollow particles}]/(100-[\text{Mass of the isopropanol}]/[\text{Specific gravity of the isopropanol at the measuring temperature}]) \quad \text{Formula (I)}$$

The apparent density $D_1$ is equivalent to the specific gravity of the whole hollow particle in the case where the hollow portion is regarded as a part of the hollow particle.

A method for measuring the true density $D_0$ of the hollow particles is as follows. The hollow particles are pulverized in advance; approximately 10 g of the pulverized hollow particles are introduced into a measuring flask with a volume of 100 $cm^3$; and the mass of the introduced pulverized particles is precisely weighed. After that, similarly to the measurement of the apparent density mentioned above, isopropanol is added to the measuring flask; the mass of the isopropanol is precisely weighed; and the true density $D_0$ (g/$cm^3$) of the hollow particles is calculated by the following formula (II).

$$\text{True density } D_0 = [\text{Mass of the pulverized hollow particles}]/(100-[\text{Mass of the isopropanol}]/[\text{Specific gravity of the isopropanol at the measuring temperature}]) \quad \text{Formula (II)}$$

The true density $D_0$ is equivalent to the specific gravity of the shell portion alone of the hollow particle. As is clear from the measurement method mentioned above, when calculating the true density $D_0$, the hollow portion is not regarded as a part of the hollow particle.

The void ratio (%) of the hollow particles is calculated by the following formula (III) where $D_1$ is the apparent density of the hollow particles and $D_0$ is the true density thereof.

$$\text{Void ratio (\%)} = 100-(\text{Apparent density } D_1/\text{True density } D_0)\times 100 \quad \text{Formula (III)}$$

The volume average particle diameter of the hollow particles of the present disclosure is 10 um or more and 50 um or less. The lower limit of the volume average particle diameter is preferably 13 um or more, and more preferably 15 um or more. The upper limit is preferably 40 um or less, and more preferably 30 um or less. When the volume average particle diameter of the hollow particles is equal to or more than the lower limit value, the hollow particles can exert excellent pressure resistance, despite the high void ratio. In addition, since the aggregability of the hollow particles is lowered, excellent dispersibility can be exerted. When the volume average particle diameter of the hollow particles is equal to or less than the upper limit value, shell thickness non-uniformity can be suppressed.

The thickness of the shell of the hollow particles of the present disclosure is not particularly limited. From the viewpoint of increasing the pressure resistance, the shell thickness is preferably 0.20 um or more, and more preferably 0.50 um or more. From the viewpoint of increasing the void ratio, the shell thickness is preferably 4.00 um or less, and more preferably 2.00 um or less.

In the present disclosure, the thickness of the shell of the hollow particles is a value obtained by calculating the inner diameter r of the hollow particles by the following formula (1) using the volume average particle diameter R and void ratio of the hollow particles, and calculating the shell thickness by the following formula (2) using the inner diameter r and the volume average particle diameter R.

$$4/3\pi\times(R/2)^3\times(\text{Void ratio}/100) = 4/3\pi\times(r/2)^3 \quad \text{Formula (1)}$$

$$\text{Shell thickness} = (R-r)/2 \quad \text{Formula (2)}$$

The void ratio in the formula (1) is a figure expressed in percentage.

The particle size distribution (volume average particle diameter (Dv)/number average particle diameter (Dn)) of the hollow particles may be 1.1 or more and 2.5 or less, for example. When the particle size distribution is 2.5 or less, hollow particles such that compressive strength and heat resistance slightly vary between the hollow particles, can be obtained. When the particle size distribution is 2.5 or less, a product having uniform thickness can be produced in the case of producing a molded body in a sheet form, for example.

The volume average particle diameter (Dv) and number average particle diameter (Dn) of the hollow particles can be found as follows, for example. The particle diameter of each of the hollow particles is measured with a particle size distribution measuring apparatus; the number average and volume average of the particle diameters are calculated; and the obtained values can be used as the number average particle diameter (Dn) and volume average particle diameter (Dv) of the hollow particles. The particle size distribution is found by dividing the volume average particle diameter by the number average particle diameter.

The shape of the hollow particles of the present disclosure is not particularly limited, as long as the hollow portion is formed in the interior. A spherical shape is preferable from the viewpoint of pressure resistance.

The hollow particles of the present disclosure may have one or two or more hollow portions. From the viewpoint of maintaining good balance between high void ratio and mechanical strength, the hollow particles preferably have only one hollow portion. The shell of the hollow particles of the present disclosure and, when the hollow particles have two or more hollow portions, a partition separating the adjacent hollow portions from each other may be porous. From the viewpoint of suppressing a decrease in pressure resistance, the shell and the partition are preferably solid.

The average circularity of the hollow particles of the present disclosure is preferably from 0.950 to 1.000, and more preferably from 0.970 to 1.000. The term "circularity" is defined as a value obtained by dividing the perimeter of a circle having the same area as the projected area of a particle image, by the perimeter of the projected image of the particle. Also in the present disclosure, the term "average circularity" is used as a simple method for quantitatively representing the shape of the particles. The average circularity is 1 when the hollow particles are perfectly spherical, and it gets smaller as the surface shape of the hollow particles becomes more complex.

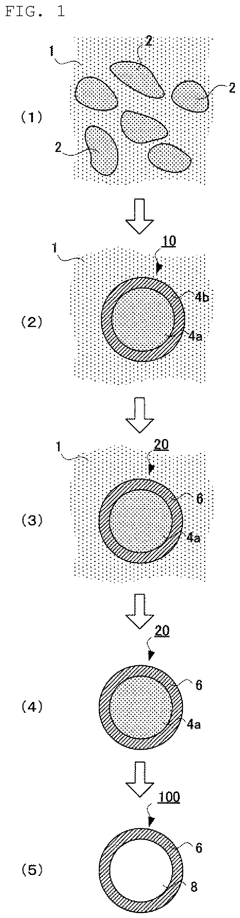

An example of the image of the shape of the hollow particles of the present disclosure, is a bag made of a thin film and inflated with gas. A cross-section of the bag is like the hollow particle 100 shown in the diagram (5) of FIG. 1. In this example, one thin film is provided on the outside, and the interior is filled with gas.

The shape of the particles can be determined by SEM or TEM, for example. Further, the shape of the interior of the particles and the presence of the fine resin particles in the interior of the particles can be determined by SEM or TEM after cutting the particles into round slices by a known method.

In the hollow particles of the present disclosure, when observed in plan view, the percentage of particles having a dent with a size of 5% to 50% of the particle diameter, is 10% or less, and it is preferably less than 5%.

In the case of hollow particles having a dent with a size of 5% or more of the particle diameter when observed in plan view, the pressure resistance of the particles is easily decreased by the dent. In the case of hollow particles having a dent with a size of more than 50% of the particle diameter, the void ratio of the particles is generally less than 60% and insufficient. Accordingly, in the hollow particles of the present disclosure which have a void ratio of 60% or more, the percentage of particles having a dent with a size of 5% to 50% of the particle diameter when observed in plan view, is controlled to the upper limit value or less, thereby suppressing a decrease in the pressure resistance caused by the dent. Accordingly, the hollow particles of the present disclosure can balance a high void ratio and excellent pressure resistance.

It is thought that the dent of the hollow particles is likely to be formed after the polymerization reaction for forming the shell is performed. To produce the hollow particles without the dent, it is effective to control the composition of the shell, the particle diameter of the hollow particles, the type of the hydrophobic solvent included in the hollow particles in the production of the particles, the speed of stirring the suspension during the polymerization reaction in the production of the hollow particles, the temperature increase rate, and so on to preferred values described in the present disclosure. It is estimated that deformation of the shell can be suppressed by controlling them, and formation of the dent can be suppressed.

The percentage of particles having a dent with a size of 5% to 50% of the particle diameter when observed in plan view, can be determined by observing the hollow particles of the present disclosure after solvent removal, in plan view from a randomly selected direction. The plan view observation is carried out by use of a field emission scanning electron microscopy (FE-SEM), for example. When the hollow particles of the present disclosure are obtained by the production method described below, the hollow particles after solvent removal are hollow particles obtained after the solvent removal step, that is, hollow particles in the state where no liquid is present in both the interior and exterior of the hollow particles. The state where no liquid is present in the exterior of the hollow particles differs from the state where the hollow particles are present in a slurry, and it means that the hollow particles are in a dry powder form. The state where no liquid is present in the interior of the hollow particles may be the state where the amount of the liquid in the interior of the hollow portion is 0.5 parts by mass or less with respect to 100 parts by mass of the hollow particles.

The particle diameter of the hollow particles is the diameter of a circle having the same area as the projected area of the particle image, and it can be measured from the FE-SEM image of the hollow particles. The size of the dent of the hollow particles is the distance in the maximum width direction of the plan view form of the dent, and it can be measured from the FE-SEM image of the hollow particles.

In the hollow particles, the percentage of particles having a dent with a size of 5% to 50% of the particle diameter when observed in plan view, can be measured by randomly selecting 100 hollow particles from the hollow particles shown in the FE-SEM image and, of the 100 selected hollow particles, counting the number of the particles having a dent with a size of 5% to 50% of the particle diameter of the hollow particles.

The hollow particles of the present disclosure contains, as the resin in the shell, a polymer in which from 70 parts by mass to 100 parts by mass of a crosslinkable monomer unit is contained in 100 parts by mass of all monomer units, and the crosslinkable monomer unit contains a bifunctional crosslinkable monomer unit derived from a bifunctional crosslinkable monomer and a trifunctional or higher-functional crosslinkable monomer unit derived from a trifunctional or higher-functional crosslinkable monomer.

The polymer forms the framework of the shell of the hollow particles. Since the shell contains the crosslinkable monomer unit in the above amount, the covalent bond network is tightly strung in the shell of the hollow particles of the present disclosure. In addition, since the crosslinkable monomer unit contains the bifunctional crosslinkable monomer unit in combination with the trifunctional or higher-functional crosslinkable monomer unit, the crosslinking structure becomes denser. As a result, the strength of the shell increases, and the pressure resistance thereof increases.

In the polymer, the content of the crosslinkable monomer unit in 100 parts by mass of all monomer units, is preferably from 75 parts by mass to 98 parts by mass, and more preferably from 85 parts by mass to 96 parts by mass, from the viewpoint of increasing the strength and pressure resistance of the hollow particles.

In the present disclosure, the crosslinkable monomer unit is a monomer unit derived from a crosslinkable monomer; the bifunctional crosslinkable monomer unit is a monomer unit derived from a bifunctional crosslinkable monomer; and the trifunctional or higher-functional crosslinkable monomer unit is a monomer unit derived from a trifunctional or higher-functional crosslinkable monomer.

When the content of the crosslinkable monomer unit in the polymer is less than 100 parts by mass, the monomer unit other than the crosslinkable monomer unit is a non-crosslinkable monomer unit derived from a non-crosslinkable monomer.

The polymer is typically a polymer of the polymerizable monomer used in the below-described method for producing the hollow particles of the present disclosure.

Details of the crosslinkable and non-crosslinkable monomers used for synthesis of the polymer are as described below in the method for producing the hollow particles of the present disclosure.

The content of the bifunctional crosslinkable monomer unit in 100 parts by mass of all monomer units of the polymer, is not particularly limited. From the viewpoint of increasing the strength and pressure resistance of the hollow particles, the lower limit of the content is preferably 60 parts by mass or more, and more preferably 65 parts by mass or more, and it may be 70 parts by mass or more. From the viewpoint of sufficiently containing the trifunctional or higher-functional crosslinkable monomer unit, the upper limit is preferably 95 parts by mass or less, and it may be 90 parts by mass or less.

The content of the trifunctional or higher-functional crosslinkable monomer unit in 100 parts by mass of all monomer units of the polymer, is not particularly limited. From the viewpoint of increasing the strength and pressure resistance of the hollow particles, the lower limit is preferably 5 parts by mass or more, more preferably 10 parts by mass or more, and still more preferably 15 parts by mass or more. From the viewpoint of sufficiently containing the bifunctional crosslinkable monomer unit, the upper limit is preferably 40 parts by mass or less, and more preferably 30 parts by mass or less, and it may be 20 parts by mass or less.

The crosslinkable monomer unit contained in the polymer preferably contains a crosslinkable monomer unit derived from a (meth)acrylic crosslinkable monomer containing, as a polymerizable functional group, a (meth)acryloyl group. Accordingly, the strength, pressure resistance and heat resistance of the hollow particles of the present disclosure are increased.

When the polymer contains a crosslinkable monomer unit derived from a (meth)acrylic crosslinkable monomer, the content of the crosslinkable monomer unit derived from a (meth)acrylic crosslinkable monomer in 100 parts by mass of the crosslinkable monomer unit, is preferably 50 parts by mass or more, more preferably 70 parts by mass or more, and still more preferably 90 parts by mass or more, or the crosslinkable monomer unit may be composed of the (meth)acrylic crosslinkable monomer unit.

When the volume average particle diameter of the hollow particles is 10 um or more and 20 um or less, the trifunctional or higher-functional crosslinkable monomer unit contained in the polymer is preferably a crosslinkable monomer unit derived from a trifunctional or higher-functional methacrylic crosslinkable monomer, and more preferably a crosslinkable monomer unit derived from a trifunctional methacrylic crosslinkable monomer.

On the other hand, when the volume average particle diameter of the hollow particles is more than 20 um and 50 um or less, the trifunctional or higher-functional crosslinkable monomer unit contained in the polymer is not particularly limited, and it may be a crosslinkable monomer unit derived from a trifunctional or higher-functional (meth)acrylic crosslinkable monomer, a crosslinkable monomer unit derived from a trifunctional or higher-functional acrylic crosslinkable monomer, or a crosslinkable monomer unit derived from a tetrafunctional or higher-functional acrylic crosslinkable monomer.

The volume average particle diameter of the hollow particles can be controlled by the type of the crosslinkable monomer used in the production of the hollow particles, the type of the hydrophobic solvent included in the particles in the production process, the presence or absence of the second polymerization reaction, and so on. To obtain the hollow particles having a volume average particle diameter of 10 um or more and 20 um or less, it is preferable to use a trifunctional or higher-functional methacrylic crosslinkable monomer as the crosslinkable monomer and to select the hydrophobic solvent depending on the particle diameter. It is also preferable to perform the second polymerization reaction by adding another polymerizable monomer. To obtain the hollow particles having a volume average particle diameter of more than 20 um and 50 um or less, it is preferable to use a trifunctional or higher-functional acrylic crosslinkable monomer as the crosslinkable monomer, or it is preferable to use a trifunctional or higher-functional methacrylic crosslinkable monomer as the crosslinkable monomer and not to perform the second polymerization reaction.

Details of the (meth)acrylic and methacrylic crosslinkable monomers are as described below in the method for producing the hollow particles of the present disclosure.

The polymer may further contain a non-crosslinkable monomer unit. When the polymer contains the crosslinkable monomer unit in combination with the non-crosslinkable monomer unit, the mechanical properties of the shell of the hollow particles may improve.

From the viewpoint of sufficiently containing the crosslinkable monomer unit in the polymer, the content of the non-crosslinkable monomer unit in 100 parts by mass of all monomer units is from 0 part by mass to 30 parts by mass, preferably 25 parts by mass or less, and more preferably 15 parts by mass or less. On the other hand, by exerting the effect of increasing the strength of the hollow particles by the combination of the crosslinkable monomer unit and the non-crosslinkable monomer unit, the content of the non-crosslinkable monomer unit may be 2 parts by mass or more, or it may be 4 parts by mass or more.

In the hollow particles, the content of the polymer is preferably 90% by mass or more, and more preferably 95% by mass or more, in the total solid content (100% by mass) of the shell. The strength of the hollow particles can be increased by controlling the content of the polymer to the lower limit value or more.

The shell of the hollow particles of the present disclosure may further contain a polar component. As the polar component, examples include, but are not limited to, an organic acid, a metal salt thereof, and a polar resin. Details of the polar component are as described below in the method for producing the hollow particles of the present disclosure.

The presence and content of the polar component in the shell of the hollow particles can be determined by pyrolysis-gas chromatography, for example.

When the shell of the hollow particles of the present disclosure contains an organic acid or a metal salt thereof as the polar component, the total content of the organic acid and metal salt thereof in the shell is preferably from 0.0001% by mass to 0.1% by mass, and more preferably from 0.001% by mass to 0.01% by mass.

When the shell of the hollow particles of the present disclosure contains a polar resin as the polar component, the content of the polar resin in the shell is preferably from 0.1% by mass to 10.0% by mass, and more preferably from 0.3% by mass to 8.0% by mass.

When the shell contains the polar component, a decrease in the strength of the shell can be suppressed, and a decrease in the pressure resistance of the hollow particles can be suppressed.

In SEM observation of the hollow particles of the present disclosure, the number of hollow particles having a communication hole or shell defect is preferably 5 or less per 100 of the observed particles.

In general, there are two types of hollow particles: hollow particles in which the shell has no communication hole communicating between the hollow portion and the external space of the particles, and hollow particles in which the shell has one or two or more communication holes and the hollow portion communicates with the exterior of the particles via the communication holes. Depending on the size of the hollow particles, the diameter of the communication hole is generally about 10 nm to 500 nm. The communication hole imparts beneficial functions to the hollow particles. On the other hand, since the communication hole is a defective part of the shell, it may decrease the strength of the hollow particles and easily cause a collapse of the particles.

Some hollow particles have a shell defect which is in the form of a very large crack relative to the size of the particles. Depending on the size of the hollow particles, a crack having a length of 1 um or more generally deteriorates the strength of the hollow particles. Accordingly, it is recognized as a shell defect.

2. Method for producing hollow particles

The hollow particles of the present disclosure can be obtained by, for example, a method for producing hollow particles,
the method comprising:

preparing a mixture liquid containing a polymerizable monomer, a hydrophobic solvent, a polymerization initiator, a dispersion stabilizer and an aqueous medium,
suspending the mixture liquid to prepare a suspension in which droplets of a monomer composition containing the polymerizable monomer, the hydrophobic solvent and the polymerization initiator are dispersed in the aqueous medium, and
subjecting the suspension to a polymerization reaction to prepare a precursor composition containing precursor particles which have a hollow portion surrounded by a shell containing a resin and which include the hydrophobic solvent in the hollow portion.

The method for producing the hollow particles follows the following basic technique: by carrying out the suspension treatment of the mixture liquid containing the polymerizable monomer, the hydrophobic solvent, the polymerization initiator, the dispersion stabilizer and the aqueous medium, phase separation occurs between the polymerizable monomer and the hydrophobic solvent. Accordingly, the suspension in which droplets are dispersed in the aqueous medium, the droplets having a distribution structure such that the polymerizable monomer is distributed on the surface side and the hydrophobic solvent is distributed in the center, is prepared. By subjecting the suspension to a polymerization reaction, the surface of the droplets is cured to form the hollow particles having the hollow portion filled with the hydrophobic solvent.

The method for producing the hollow particles includes the steps of preparing the mixture liquid, preparing the suspension, and subjecting the suspension to the polymerization reaction. The method may further include other steps. As far as technically possible, two or more of the above steps and other additional steps may be simultaneously carried out as one step, or their order may be changed and then they may be carried out in that order. For example, the preparation and suspension of the mixture liquid may be simultaneously carried out in one step (e.g., the mixture liquid may be suspended while adding the materials for the mixture liquid).

A preferred embodiment of the method for producing the hollow particles may be a production method including the following steps.

(1) Mixture liquid preparation step

The mixture liquid preparation step includes preparing the mixture liquid containing the polymerizable monomer, the hydrophobic solvent, the polymerization initiator, the dispersion stabilizer and the aqueous medium.

(2) Suspension step

The suspension step includes suspending the mixture liquid to prepare the suspension in which the droplets of the monomer composition containing the polymerizable monomer, the hydrophobic solvent and the polymerization initiator are dispersed in the aqueous medium.

(3) Polymerization step

The polymerization step includes subjecting the suspension to a polymerization reaction to prepare the precursor composition containing the precursor particles which have the hollow portion surrounded by the shell containing the resin and which include the hydrophobic solvent in the hollow portion.

(4) Solid-liquid separation step

The solid-liquid separation step includes performing solid-liquid separation of the precursor composition to obtain the precursor particles including the hydrophobic solvent in the hollow portion.

(5) Solvent removal step

The solvent removal step includes removing the hydrophobic solvent from the precursor particles obtained by the solid-liquid separation step to obtain the hollow particles.

In the present disclosure, the hollow particles having the hollow portion filled with the hydrophobic solvent, may be considered as the intermediate of the hollow particles in which the hollow portion is filled with gas, and they may be referred to as the "precursor particles". Also in the present disclosure, the "precursor composition" means a composition containing the precursor particles.

FIG. 1 is a schematic diagram showing an example of the method for producing the hollow particles of the present disclosure. The diagrams (1) to (5) in FIG. 1 correspond to the steps (1) to (5) described above, respectively. White arrows between the diagrams indicate the order of the steps. FIG. 1 is merely a schematic diagram for description, and the production method is not limited to the method shown in FIG. 1. Further, the structures, dimensions and shapes of materials used for the production method of the present disclosure are not limited to the structures, dimensions and shapes of various materials shown in these diagrams.

The diagram (1) of FIG. 1 is a schematic cross-sectional view showing an embodiment of the mixture liquid in the mixture liquid preparation step. As shown in the diagram, the mixture liquid contains an aqueous medium 1 and a low polarity material 2 dispersed in the aqueous medium 1. Here, the low polarity material 2 means a material that has low polarity and is less likely to mix with the aqueous medium 1. In the present disclosure, the low polarity material 2 contains the polymerizable monomer, the hydrophobic solvent and the polymerization initiator.

The diagram (2) of FIG. 1 is a schematic cross-sectional view showing an embodiment of the suspension in the suspension step. The suspension contains the aqueous medium 1 and a droplet 10 of the monomer composition dispersed in the aqueous medium 1. The droplet 10 of the monomer composition contains the polymerizable monomer, the hydrophobic solvent and the polymerization initiator, and their distribution in the droplet is not uniform. The droplet 10 of the monomer composition has the following structure: phase separation occurs between a hydrophobic solvent 4a and a material 4b containing the polymerizable monomer and not containing the hydrophobic solvent; the hydrophobic solvent 4a is distributed in the center; the material 4b not containing the hydrophobic solvent is distributed on the surface side; and the dispersion stabilizer (not shown) is on the surface.

The diagram (3) of FIG. 1 is a schematic cross-sectional view showing an embodiment of the precursor composition containing the precursor particles which have the hollow portion surrounded by the shell containing the resin and which include the hydrophobic solvent in the hollow portion. The precursor composition contains the aqueous medium 1 and the precursor particle (a precursor particle 20) which includes the hydrophobic solvent 4a in the hollow portion. A shell 6 forming the outer surface of the precursor particle 20 is formed by polymerization of the polymerizable monomer in the droplet 10 of the monomer composition, and the shell 6 contains the polymer of the polymerizable monomer as the resin.

The diagram (4) of FIG. 1 is a schematic cross-sectional view showing an embodiment of the precursor particle after the solid-liquid separation step. The diagram (4) of FIG. 1 shows a state where the aqueous medium 1 has been removed from the state shown in the diagram (3) of FIG. 1.

The diagram (5) of FIG. 1 is a schematic cross-sectional view showing an embodiment of the hollow particle after the solvent removal step. The diagram (5) of FIG. 1 shows a state where the hydrophobic solvent 4a has been removed from the state shown in the diagram (4) of FIG. 1. By the removal of the hydrophobic solvent from the precursor particle, a hollow particle 100 having a gas-filled hollow portion 8 in the interior of the shell 6, is obtained.

Hereinbelow, the five steps described above and other steps are described in order.

(1) Mixture liquid preparation step

The mixture liquid preparation step includes preparing the mixture liquid containing the polymerizable monomer, the hydrophobic solvent, the polymerization initiator, the dispersion stabilizer and the aqueous medium. The mixture liquid may further contain other materials to the extent that does not impair the effects of the present disclosure.

The materials for the mixture liquid will be described in the order of (A) the polymerizable monomer, (B) the hydrophobic solvent, (C) the polymerization initiator, (D) the dispersion stabilizer, (E) the aqueous medium and (F) other materials.

(A) Polymerizable monomer

In the production method, the polymerizable monomer in the mixture liquid contains at least the crosslinkable monomer. It may further contain the non-crosslinkable monomer to the extent that does not impair the effects of the present disclosure.

From the point of view that the polymerization reaction is easily stabilized and hollow particles with excellent strength and excellent heat resistance are obtained, a (meth)acrylic polymerizable monomer containing a (meth)acryloyl group as a polymerizable functional group, is preferably used as the polymerizable monomer.

[Crosslinkable monomer]

Since the crosslinkable monomer has a plurality of ethylenically unsaturated double bonds, the double bonds can link monomers and increase the crosslinking density of the shell.

As the crosslinkable monomer, examples include a bifunctional crosslinkable monomer having two polymerizable functional groups and a trifunctional or higher-functional crosslinkable monomer having three or more polymerizable functional groups.

As the bifunctional crosslinkable monomer, examples include, but are not limited to, divinylbenzene, divinylbiphenyl, divinylnaphthalene, diallyl phthalate, allyl (meth)acrylate, ethylene glycol di(meth)acrylate, diethylene glycol di(meth)acrylate, pentaerythritol di(meth)acrylate, tricyclodecane dimethanol di(meth)acrylate, and polymer-type crosslinkable monomers such as both-vinyl-terminated polyphenylene ether and both-(meth)acrylic-terminated polyphenylene ether. From the point of view that the polymerization reaction is easily stabilized and hollow particles with excellent strength and excellent heat resistance are obtained, preferred are bifunctional (meth)acrylic crosslinkable monomers such as allyl (meth)acrylate, ethylene glycol di(meth)acrylate, diethylene glycol di(meth)acrylate and pentaerythritol di(meth)acrylate, and more preferred are ethylene glycol di(meth)acrylate and pentaerythritol di(meth)acrylate. Of these bifunctional (meth)acrylic crosslinkable monomers, a bifunctional methacrylic crosslinkable monomer in which the polymerizable functional groups are methacryloyl groups, is still more preferred.

In the present disclosure, the (meth)acrylic crosslinkable monomer are a crosslinkable monomer which has at least one methacryloyl or acryloyl group as a polymerizable functional group, and the (meth)acrylic crosslinkable monomer is preferably a crosslinkable monomer in which polymerizable functional groups are methacryloyl and/or acryloyl groups. Meanwhile, the methacrylic crosslinkable monomer is preferably a crosslinkable monomer which has at least one methacryloyl group as a polymerizable functional group and which does not have an acryloyl group, and the (meth)acrylic crosslinkable monomer is preferably a crosslinkable monomer in which all polymerizable functional groups are methacryloyl groups.

When the polymerizable monomer in the mixture liquid contains the (meth)acrylic crosslinkable monomer, the content of the (meth)acrylic crosslinkable monomer in 100 parts by mass of the crosslinkable monomer contained in the polymerizable monomer, is preferably 50 parts by mass or more, more preferably 70 parts by mass or more, and still more preferably 90 parts by mass or more. The crosslinkable monomer contained in the polymerizable monomer may be composed of the (meth)acrylic crosslinkable monomer.

From the point of view that the polymerization reaction is easily stabilized and hollow particles with excellent strength and excellent heat resistance are obtained, preferred are trifunctional or higher-functional (meth)acrylic crosslinkable monomers such as trimethylolpropane tri(meth)acrylate, ditrimethylolpropane tetra(meth)acrylate, pentaerythritol tri(meth)acrylate, pentaerythritol tetra(meth)acrylate, dipentaerythritol hexa(meth)acrylate, dipentaerythritol poly(meth)acrylate, and ethoxylates thereof. Of them, pentaerythritol tetra(meth)acrylate, trimethylolpropane tri(meth)acrylate, ethoxylated trimethylolpropane tri(meth)acrylate, ethoxylated pentaerythritol tetra(meth)acrylate, pentaerythritol tri(meth)acrylate and dipentaerythritol poly(meth)acrylate are more preferred, and trimethylolpropane tri(meth)acrylate and pentaerythritol tetra(meth)acrylate are still more preferred.

Also, a polymer-type crosslinkable hydrocarbon monomer may be used, such as polybutadiene, polyisoprene, styrenebutadiene block copolymer (SBS), and styrene-isoprene block copolymer (SIS).

From the viewpoint of controlling the volume average particle diameter of the hollow particles to 10 um or more and 20 um or less, the trifunctional or higher-functional crosslinkable monomer is preferably a trifunctional or higher-functional methacrylic crosslinkable monomer, and more preferably a trifunctional methacrylic crosslinkable monomer. As the trifunctional methacrylic crosslinkable monomer, examples include, but are not limited to, trimethylolpropane trimethacrylate, ethoxylated trimethylolpropane trimethacrylate and pentaerythritol trimethacrylate. Of them, trimethylolpropane trimethacrylate is preferred.

On the other hand, from the viewpoint of controlling the volume average particle diameter of the hollow particles to more than 20 um and 50 um or less, the trifunctional or higher-functional crosslinkable monomer is not particularly limited, and it may be a trifunctional or higher-functional (meth)acrylic crosslinkable monomer, a trifunctional or higher-functional acrylic crosslinkable monomer, or a tetrafunctional or higher-functional acrylic crosslinkable monomer. In the present disclosure, the acrylic crosslinkable monomer is a crosslinkable monomer which has at least one acryloyl group as a polymerizable functional group and which does not have a methacryloyl group, and the acrylic crosslinkable monomer is preferably a crosslinkable monomer in which all polymerizable functional groups are acryloyl groups.

As the trifunctional acrylic crosslinkable monomer, examples include, but are not limited to, trimethylolpropane triacrylate, ethoxylated trimethylolpropane triacrylate and pentaerythritol triacrylate.

As the tetrafunctional or higher-functional acrylic crosslinkable monomer, examples include, but are not limited to, ditrimethylolpropane tetraacrylate, pentaerythritol tetraacrylate, dipentaerythritol hexaacrylate, dipentaerythritol polyacrylate and ethoxylates thereof. Of them, pentaerythritol tetraacrylate, ethoxylated pentaerythritol tetraacrylate and dipentaerythritol polyacrylate are preferred, and pentaerythritol tetraacrylate is more preferred.

These crosslinkable monomers may be used alone or in combination of two or more.

The content of the crosslinkable monomer is preferably from 70 parts by mass to 100 parts by mass, with respect to the total mass (100 parts by mass) of the polymerizable monomer in the mixture liquid. When the content of the crosslinkable monomer is 70 parts by mass or more, the content of the crosslinkable monomer unit in the shell of the hollow particles is large enough. Accordingly, a covalent bond network is tightly strung in the shell. As a result, the shell thus formed is excellent in strength, is less likely to collapse, and is less likely to deform even when heat or the like is applied from the outside. The content of the crosslinkable monomer is preferably 80 parts by mass or more, and more preferably 90 parts by mass or more. When the polymerizable monomer in the mixture liquid contains a non-crosslinkable monomer, the content of the crosslinkable monomer may be 98 parts by mass or less, or it may be 96 parts by mass or less, for example.

The polymerizable monomer in the mixture liquid contains a bifunctional crosslinkable monomer and a trifunctional or higher-functional crosslinkable monomer as the crosslinkable monomer. Accordingly, the hollow portion is easily formed in the interior of the particles, and the shell strength is further increased.

The content of the bifunctional crosslinkable monomer in 100 parts by mass of the polymerizable monomer in the mixture liquid, is not particularly limited. From the viewpoint of increasing the strength and pressure resistance of the hollow particles, the lower limit of the content is preferably 60 parts by mass or more, and more preferably 65 parts by mass or more, and it may be 70 parts by mass or more. From the viewpoint of sufficiently containing the trifunctional or higher-functional crosslinkable monomer unit, the upper limit is preferably 95 parts by mass or less, and it may be 90 parts by mass or less.

The content of the trifunctional or higher-functional crosslinkable monomer in 100 parts by mass of the polymerizable monomer in the mixture liquid, is not particularly limited. From the viewpoint of increasing the strength and pressure resistance of the hollow particles, the lower limit is preferably 5 parts by mass or more, more preferably 10 parts by mass or more, and still more preferably 15 parts by mass or more. From the viewpoint of sufficiently containing the bifunctional crosslinkable monomer unit, the upper limit is preferably 40 parts by mass or less, and more preferably 30 parts by mass or less, and it may be 20 parts by mass or less.

When the volume average particle diameter of the hollow particles is 10 um or more and 20 um or less, the trifunctional or higher-functional crosslinkable monomer in the mixture liquid is preferably a trifunctional crosslinkable monomer. On the other hand, when the volume average particle diameter of the hollow particles is more than 20 um and 50 um or less, the trifunctional or higher-functional crosslinkable monomer in the mixture liquid is preferably a tetrafunctional or higher-functional crosslinkable monomer.

[Non-crosslinkable monomer]

The polymerizable monomer in the mixture liquid may further contain a non-crosslinkable monomer to the extent that does not impair the effects of the present disclosure. When the polymerizable monomer in the mixture liquid contains the crosslinkable monomer in combination with the non-crosslinkable monomer, the mechanical properties of the shell of the obtained hollow particles may be improved.

As the non-crosslinkable monomer, a monovinyl monomer is preferably used. The monovinyl monomer is a compound having one polymerizable vinyl functional group. As the monovinyl monomer, examples include, but are not limited to, the following: a (meth)acrylic monovinyl monomer such as methyl (meth)acrylate, ethyl (meth)acrylate, butyl (meth)acrylate, 2-ethylhexyl (meth)acrylate, lauryl (meth)acrylate, glycidyl (meth)acrylate, 2-hydroxyethyl (meth)acrylate and (meth)acrylic acid; an aromatic vinyl monomer such as styrene, vinyltoluene, $\alpha$-methylstyrene, p-methylstyrene, ethylvinylbenzene, ethylvinylbiphenyl, ethylvinylnaphthalene and halogenated styrene; a monoolefin monomer such as ethylene, propylene and butylene; a (meth)acrylamide monomer such as (meth)acrylamide, N-methylol (meth)acrylamide and N-butoxymethyl (meth)acrylamide and derivatives thereof; a diene monomer such as butadiene and isoprene; a carboxylic acid vinyl ester monomer such as vinyl acetate; a vinyl halide monomer such as vinyl chloride; a vinylidene halide monomer such as vinylidene chloride; and vinylpyridine. These non-crosslinkable monomers may be used alone or in combination of two or more.

Of them, from the viewpoint of reactivity and heat resistance, the (meth)acrylic monovinyl monomer is preferred, and at least one selected from butyl acrylate and methyl methacrylate is more preferred.

With respect to 100 parts by mass of the polymerizable monomer in the mixture liquid, the content of the non-crosslinkable monomer is preferably 30 parts by mass or less, more preferably 20 parts by mass or less, and still more preferably 10 parts by mass or less, from the viewpoint of sufficiently containing the crosslinkable monomer. On the other hand, from the viewpoint of obtaining the effect of increasing the strength of the hollow particles by the combination of the crosslinkable and non-crosslinkable monomers, the content of the non-crosslinkable monomer may be 2 parts by mass or more, or it may be 4 parts by mass or more.

With respect to the total (100 parts by mass) of the polymerizable monomer and the hydrophobic solvent in the mixture liquid, the content of the polymerizable monomer is preferably from 15 parts by mass to 50 parts by mass, more preferably from 20 parts by mass to 40 parts by mass, and still more preferably from 20 parts by mass to 30 parts by mass. When the content of the polymerizable monomer is within the range, the balance of the void ratio, particle diameter and mechanical strength of the hollow particles becomes excellent.

From the viewpoint of increasing the mechanical strength of the hollow particles, the content of the polymerizable monomer is preferably 90% by mass or more, and more preferably 95% by mass or more, with respect to the total mass (100% by mass) of a solid component obtained by excluding the hydrophobic solvent from the material for the oil phase in the mixture liquid.

In the present disclosure, the solid component includes all components excluding a solvent, and a liquid polymerizable monomer and the like are included in the solid component.

(B) Hydrophobic solvent

The hydrophobic solvent used in the above-described production method is a non-polymerizable, sparingly water-soluble organic solvent.

The hydrophobic solvent serves as a spacer material for forming the hollow portion in the interior of particles. In the suspension step described later, the suspension in which the droplets of the monomer composition containing the hydrophobic solvent are dispersed in the aqueous medium, is obtained. In the suspension step, phase separation occurs in the droplets of the monomer composition. As a result, the hydrophobic solvent with low polarity is likely to collect in the interior of the droplets of the monomer composition. In the end, according to their respective polarities, the hydrophobic solvent is distributed in the interior of the droplets of the monomer composition, and the material not containing the hydrophobic solvent is distributed at the periphery of the droplets of the monomer composition.

Then, in the polymerization step described later, an aqueous dispersion containing the hollow particles including the hydrophobic solvent, is obtained. That is, since the hydrophobic solvent collects in the interior of the particles, the hollow portion filled with the hydrophobic solvent is formed in the interior of the obtained precursor particles.

In the above-described production method, the hydrophobic solvent is appropriately selected depending on the type of the polymerizable monomer, and it is not particularly limited. As the hydrophobic solvent, a conventionally-known hydrophobic solvent may be used. As the hydrophobic solvent, examples include, but are not limited to, esters such as ethyl acetate and butyl acetate; ether esters such as propylene glycol monomethyl ether acetate and propylene glycol monoethyl ether acetate; aromatic hydrocarbons such as benzene, toluene and xylene; and aliphatic hydrocarbons such as hexane, methylhexane, heptane, octane, cyclohexane and methylcyclohexane. These hydrophobic solvents may be used alone or in combination of two or more.

The hydrophobic solvent is preferably selected so that the HSP distance between the crosslinkable monomer and the hydrophobic solvent in the polymerizable monomer is 5.40 or more and 6.50 or less. The HSP distance is more preferably 5.80 or more and 6.40 or less, and it is still more preferably 5.90 or more and 6.30 or less. When the HSP distance between the crosslinkable monomer and the hydrophobic solvent is within the above range, sufficient phase separation occurs between the polymerizable monomer and the hydrophobic solvent in the droplets of the monomer composition, and the hollow portion is easily formed in the interior of the particles. Also, the thickness of the shell formed by the polymerization reaction easily becomes uniform.

The HSP distance is an index representing solubility between substances by using Hansen solubility parameters (HSP). As the HSP distance comes close to 0, the compatibility between substances is determined to be high. HSP represents the vector of a three-dimensional space (Hansen space) using the following parameters as the coordinate axes: dispersion term (dD), polarity term (dP) and hydrogen bonding term (dH). The three parameters dD, dP and dH represent values specific to substances. The software developed by Hansen et al. (software name: Hansen Solubility Parameter in Practice (HSPiP)) includes the databases on the dD, dP and dH of various substances. By using HSPiP, HSP can be calculated based on the chemical structures of substances.

To obtain the HSP of a mixture of several substances, based on the dD, dP and dH values of the substances contained in the mixture and on the ratio of the substances, the weighted averages thereof are calculated to obtain the dispersion term (dD), polarity term (dP) and hydrogen bonding term (dH) of the mixture, and the HSP of the mixture are obtained.

The HSP distance is a vector distance given by the HSP of two substances, and it is calculated by the following formula (A) using the values of the three parameters of the first substance (dispersion term $dD_1$, polarity term $dP_1$ and hydrogen bonding term $dH_1$) and the values of the three parameters of the second substance (dispersion term $dD_2$, polarity term $dP_2$ and hydrogen bonding term $dH_2$).

$$\text{HSP distance} = \{4(dD_1-dD_2)^2+(dP_1-dP_2)^2+(dH_1-dH_2)^2\}^{0.5} \quad \text{Formula (A)}$$

The distance between the origin of the Hansen space and the HSP is called "total HSP" and calculated by the following formula (B) where dD is dispersion term, dP is polarity term, and dH is hydrogen bonding term.

$$\text{Total HSP} = (dD^2+dP^2+dH^2)^{0.5} \quad \text{Formula (B)}$$

In the present disclosure, the HSP distance and the total HSP are values calculated by HSPiP (version 5.3.03). In the HSPiP, each of the dD, dP and dH values is expressed as significant digits with one decimal place, and each of the HSP distance and total HSP values is expressed as significant digits with two decimal places.

From the point of view that the HSP distance between the crosslinkable monomer and the hydrophobic solvent easily falls within the above range, the hydrophobic solvent preferably contains one or more selected from the group consisting of esters, aromatic hydrocarbons and aliphatic hydrocarbons, and more preferably one or more selected from the group consisting of aromatic hydrocarbons and aliphatic hydrocarbons.

From the point of view that the HSP distance between the crosslinkable monomer and the hydrophobic solvent easily falls within the above range, the hydrophobic solvent preferably contains two or more kinds of hydrophobic solvents. The combination of the two or more kinds of hydrophobic solvents is not particularly limited and is appropriately selected so that the HSP distance falls within the above range. The combination is preferably a combination of one or more selected from aliphatic hydrocarbons and one or more selected from esters and aromatic hydrocarbons, and more preferably a combination of one or more selected from aliphatic hydrocarbons and one or more selected from esters, or a combination of one or more selected from aliphatic hydrocarbons and one or more selected from aromatic hydrocarbons.

In the above combinations, the one or more aliphatic hydrocarbons are preferably one or more selected from the group consisting of hexane, methylhexane, cyclohexane and methylcyclohexane, more preferably one or more selected from hexane and cyclohexane, and still more preferably cyclohexane.

In the above combinations, the one or more esters are preferably one or more selected from ethyl acetate and butyl acetate, and more preferably ethyl acetate.

In the above combinations, the one or more aromatic hydrocarbons are preferably one or more selected from benzene, toluene and xylene, and more preferably toluene.

In the hydrophobic solvent used in the production method of the present disclosure, the total mass of the hydrophobic solvents of any one of the above-mentioned preferred combinations contained in the total mass (100 parts by mass) of the hydrophobic solvent, is preferably 70 parts by mass or more, more preferably 80 parts by mass or more, still more preferably 90 parts by mass or more, even more preferably 95 parts by mass or more, and particularly preferably 99 parts by mass or more. The hydrophobic solvent used in the production method of the present disclosure is most preferably composed of any one of the above-mentioned preferred combinations of the hydrophobic solvents.

The hydrophobic solvent is also preferably the combination of one or more selected from aliphatic hydrocarbons and one or more selected from aromatic hydrocarbons, from the point of view that the hollow particles in which dent formation is suppressed, are easily obtained. When the volume average particle diameter of the hollow particles is more than 10 um and 50 um or less, and especially when the volume average particle diameter of the hollow particles is 20 um or more and 50 um or less, if the hydrophobic solvent is the combination of the one or more selected from aliphatic hydrocarbons and the one or more selected from aromatic hydrocarbons, dent formation on the hollow particles is easily suppressed. It is presumed that a higher-molecular-weight polymer is likely to be deposited in the oil phase during polymerization when the hydrophobic solvent contains an aromatic hydrocarbon such as toluene. It is also presumed that the deposition of the higher-molecular-weight polymer reduces the reactivity during the shell formation, thereby suppressing the deformation of the shell and obtaining hollow particles not having a dent.

In the hydrophobic solvent containing the combination of the one or more aliphatic hydrocarbons and the one or more esters, the mass ratio between the aliphatic hydrocarbons and the esters (aliphatic hydrocarbons : esters) is not particularly limited, and it is preferably from 70:30 to 95:5, and more preferably from 80:20 to 95:5.

In the hydrophobic solvent containing the combination of the one or more aliphatic hydrocarbons and the one or more aromatic hydrocarbons, the mass ratio between the aliphatic hydrocarbons and the aromatic hydrocarbons (aliphatic hydrocarbons : aromatic hydrocarbons) is not particularly limited, and it is preferably from 20:80 to 80:20, and more preferably from 30:70 to 70:30.

The total HSP of the hydrophobic solvent used in the production method of the present disclosure is not particularly limited. From the point of view that the HSP distance between the crosslinkable monomer and the hydrophobic solvent easily falls within the above range, the total HSP of the hydrophobic solvent is preferably from 16.50 MPa$^{1/2}$ to 18.00 MPa$^{1/2}$, more preferably from 16.60 MPa$^{1/2}$ to 17.80 MPa$^{1/2}$, and still more preferably from 16.70 MPa$^{1/2}$ to 17.70 MPa$^{1/2}$.

For example, a preferred combination whereby the HSP distance between the crosslinkable monomer and the hydrophobic solvent is 5.40 or more and 6.50 or less, is as follows: the crosslinkable monomer contains ethylene glycol di(meth)acrylate and at least one selected from pentaerythritol di(meth)acrylate and pentaerythritol tetra(meth)acrylate; with respect to 100 parts by mass of the crosslinkable monomer, the total content of the ethylene glycol di(meth)acrylate, pentaerythritol di(meth)acrylate and pentaerythritol tetra(meth)acrylate is preferably 70 parts by mass or more, more preferably 80 parts by mass or more, still more preferably 90 parts by mass or more, and even more preferably 100 parts by mass; the hydrophobic solvent contains a combination of one or more selected from hexane and cyclohexane and one or more selected from ethyl acetate and toluene; and with respect to 100 parts by mass of the hydrophobic solvent, the total content of the hexane, cyclohexane, ethyl acetate and toluene is preferably 70 parts by mass or more, more preferably 80 parts by mass or more, still more preferably 90 parts by mass or more, and even more preferably 100 parts by mass.

The crosslinkable monomer used in the above combination is more preferably a crosslinkable monomer in which, with respect to 100 parts by mass of the crosslinkable monomer, the content of the ethylene glycol di(meth)acrylate is 70 parts by mass or more.

The hydrophobic solvent used in the above combination is more preferably a hydrophobic solvent which contains a combination of toluene and one or more selected from hexane and cyclohexane and in which, with respect to 100 parts by mass of the hydrophobic solvent, the total content of the hexane, cyclohexane and toluene is preferably 70 parts by mass or more, more preferably 80 parts by mass or more, still more preferably 90 parts by mass or more, and even more preferably 100 parts by mass. Another more preferable hydrophobic solvent is a hydrophobic solvent which contains a combination of ethyl acetate and one or more selected from hexane and cyclohexane and in which, with respect to 100 parts by mass of the hydrophobic solvent, the total content of the hexane, cyclohexane and ethyl acetate is preferably 70 parts by mass or more, more preferably 80 parts by mass or more, still more preferably 90 parts by mass or more, and even more preferably 100 parts by mass.

For example, another preferred combination whereby the HSP distance between the crosslinkable monomer and the hydrophobic solvent is 5.40 or more and 6.50 or less, is as follows: the crosslinkable monomer contains ethylene glycol di(meth)acrylate and trimethylolpropane tri(meth)acrylate; with respect to 100 parts by mass of the crosslinkable monomer, the total content of the ethylene glycol di(meth)acrylate and trimethylolpropane tri(meth)acrylate is preferably 70 parts by mass or more, more preferably 80 parts by mass or more, still more preferably 90 parts by mass or more, and even more preferably 100 parts by mass; the hydrophobic solvent contains cyclohexane; and with respect to 100 parts by mass of the hydrophobic solvent, the content of the cyclohexane is preferably 70 parts by mass or more, more preferably 80 parts by mass or more, still more preferably 90 parts by mass or more, and even more preferably 100 parts by mass.

The crosslinkable monomer used in the above combination is preferably a crosslinkable monomer in which, with respect to 100 parts by mass of the crosslinkable monomer, the content of the ethylene glycol di(meth) acrylate is 70 parts by mass or more.

When another hydrophobic solvent different from cyclohexane is contained, another hydrophobic solvent used in the above combination is preferably toluene.

As the hydrophobic solvent such that 5.40 or more and 6.50 or less is the HSP distance between the hydrophobic solvent and the crosslinkable monomer which is a mixture of ethylene glycol dimethacrylate and pentaerythritol tetraacrylate (preferred crosslinkable monomers) in a mass ratio of 70:30 to 90:10, examples include, but are not limited to, a mixed solvent of cyclohexane and toluene in a mass ratio of 50:50 (the HSP distance between the hydrophobic solvent and ethylene glycol dimethacrylate: 6.04), a mixed solvent of cyclohexane and toluene in a mass ratio of 70:30 (the HSP distance between the hydrophobic solvent and ethylene glycol dimethacrylate: 6.40), a mixed solvent of cyclohexane and toluene in a mass ratio of 40:60 (the HSP distance between the hydrophobic solvent and ethylene glycol dimethacrylate: 5.91), a mixed solvent of cyclohexane and ethyl acetate in a mass ratio of 90:10 (the HSP distance between the hydrophobic solvent and ethylene glycol dimethacrylate: 6.01), a mixed solvent of hexane and toluene in a mass ratio of 60:40 (the HSP distance between the hydrophobic solvent and ethylene glycol dimethacrylate: 6.03), and a mixed solvent of hexane and ethyl acetate in a mass ratio of 80:20 (the HSP distance between the hydrophobic solvent and ethylene glycol dimethacrylate: 5.83).

As the hydrophobic solvent such that 5.40 or more and 6.50 or less is the HSP distance between the hydrophobic solvent and the crosslinkable monomer which is a mixture of ethylene glycol dimethacrylate and trimethylolpropane trimethacrylate (preferred crosslinkable monomers) in a mass ratio of 60:40 to 80:20, examples include, but are not limited to, cyclohexane, and a mixed solvent of cyclohexane and toluene in a mass ratio of 40:60 to 90:10.

The boiling point of the hydrophobic solvent is not particularly limited. From the viewpoint of ease of removal in the solvent removal step described later, the boiling point of the hydrophobic solvent is preferably 130°C or less, and more preferably 120°C or less. On the other hand, the boiling point of the hydrophobic solvent is preferably 50°C or more, and more preferably 60°C or more, from the point of view that the hydrophobic solvent can be easily included in the precursor particles.

When the hydrophobic solvent is a mixed solvent containing several kinds of hydrophobic solvents and it has several boiling points, the boiling point of the solvent having the highest boiling point among the solvents contained in the mixed solvent, is preferably equal to or less than the upper limit value, and the boiling point of the solvent having the lowest boiling point among the solvents contained in the mixed solvent, is preferably equal to or more than the lower limit value.

The relative permittivity at 20°C of the hydrophobic solvent used in the above-described production method, is preferably 3 or less. The relative permittivity is one of the indices of the level of the polarity of a compound. In the case where the relative permittivity of the hydrophobic solvent is 3 or less and sufficiently small, it is considered that phase separation progresses rapidly in the droplets of the polymerizable monomer and a hollow is easily formed.

Examples of hydrophobic solvents having a relative permittivity at 20°C of 3 or less, are as follows. The inside of the parentheses is the value of relative permittivity.

Pentane (1.8), hexane (1.9), heptane (1.9), octane (1.9), cyclohexane (2.0), benzene (2.3) and toluene (2.4)

For the relative permittivity at 20°C, values written in known literatures (for example, the Chemical Society of Japan, as editor, "Kagaku Binran, Kiso Hen, Kaitei 4 Ban", pp. II-498 to II-503, published by Maruzen Publishing Co., Ltd. on September 30, 1993) and other technical information may be used as reference. Examples of the method of measuring the relative permittivity at 20°C include a relative permittivity test that is in conformity with 23 of JIS C 2101:1999 and is performed with the measuring temperature set to 20°C.

The void ratio of the hollow particles can be controlled by changing the amount of the hydrophobic solvent in the mixture liquid. In the suspension step described later, the polymerization reaction progresses while oil droplets containing the crosslinkable monomer and so on include the hydrophobic solvent. Accordingly, as the content of the hydrophobic solvent increases, the void ratio of the obtained hollow particles tends to increase.

In the present disclosure, with respect to 100 parts by mass of the polymerizable monomer, the content of the hydrophobic solvent in the mixture liquid is preferably 50 parts by mass or more and 500 parts by mass or less, from the following viewpoints: the particle diameter of the hollow particles is easily controlled; the void ratio is easily increased while maintaining the strength of the hollow particles; and the amount of the residual hydrophobic solvent in the hollow particles is easily reduced. With respect to 100 parts by mass of the polymerizable monomer, the content of the hydrophobic solvent in the mixture liquid is more preferably 60 parts by mass or more and 400 parts by mass or less, and still more preferably 70 parts by mass or more and 300 parts by mass or less.

(C) Polymerization initiator

In the above-described production method, the mixture liquid preferably contains an oil-soluble polymerization initiator as the polymerization initiator. As the method for polymerizing the droplets of the monomer composition after suspending the mixture liquid, examples include an emulsion polymerization method using a water-soluble polymerization initiator and a suspension polymerization method using an oil-soluble polymerization initiator. By using the oil-soluble polymerization initiator, suspension polymerization can be performed.

The oil-soluble polymerization initiator is not particularly limited, as long as it is a lipophilic one having a solubility in water at 25°C of 2 g/L or less. As the oil-soluble polymerization initiator, examples include, but are not limited to, benzoyl peroxide, lauroyl peroxide, t-butyl peroxy-2-ethylhexanoate, 2,2'-azobis(2,4-dimethylvaleronitrile), azobis(isobutyronitrile) and 2,2'-azobis(4-methoxy-2,4-dimethylvaleronitrile).

With respect to 100 parts by mass of the polymerizable monomer in the mixture liquid, the content of the oil-soluble polymerization initiator is preferably from 0.1 parts by mass to 10 parts by mass, more preferably from 0.5 parts by mass to 7 parts by mass, and still more preferably from 1 part by mass to 5 parts by mass. When the content of the oil-soluble polymerization initiator is within the above range, a polymerization reaction can progress sufficiently; the oil-soluble polymerization initiator is less likely to remain after the end of the polymerization reaction; and an unexpected side reaction is less likely to progress.

(D) Dispersion stabilizer

The dispersion stabilizer is an agent for dispersing the droplets of the monomer composition in the aqueous medium in the suspension step. In the present disclosure, an inorganic dispersion stabilizer is preferably used as the dispersion stabilizer, from the point of view that the particle diameter of the droplets can be easily controlled in the suspension and the particle size distribution of the obtained hollow particles can be sharp, and that an excessive decrease in the shell thickness is suppressed, and a decrease in the strength of the hollow particles is suppressed.

As the inorganic dispersion stabilizer, examples include, but are not limited to, inorganic compounds including a sulfate such as barium sulfate and calcium sulfate; a carbonate such as barium carbonate, calcium carbonate and magnesium carbonate; a phosphate such as calcium phosphate; a metal oxide such as aluminum oxide and titanium oxide; and a metal hydroxide such as aluminum hydroxide, magnesium hydroxide, calcium hydroxide, barium hydroxide and iron(II)hydroxide. These inorganic dispersion stabilizers may be used alone or in combination of two or more.

Of these inorganic dispersion stabilizers, a sparingly water-soluble metal salt such as the above-mentioned sulfate, carbonate, phosphate and metal hydroxide is preferred; a metal hydroxide is more preferred; and a magnesium hydroxide is particularly preferred.

In the present disclosure, the sparingly water-soluble metal salt is preferably an inorganic metal salt such that the solubility in 100 g of water is 0.5 g or less.

In the present disclosure, the sparingly water-soluble inorganic dispersion stabilizer is particularly preferably used in the form of colloidal particles being dispersed in the aqueous medium, that is, in the form of a colloidal dispersion containing the sparingly water-soluble, inorganic dispersion stabilizer colloidal particles. Accordingly, the particle size distribution of the droplets of the monomer composition can be sharp; moreover, the amount of the residual inorganic dispersion stabilizer in the obtained hollow particles can be easily reduced by washing.

The colloidal dispersion containing the sparingly water-soluble inorganic dispersion stabilizer colloidal particles can be prepared by, for example, reacting at least one selected from alkali metal hydroxide salts and alkaline earth metal hydroxide salts with a water-soluble polyvalent metal salt, which is not an alkaline earth metal hydroxide salt, in the aqueous medium.

As the alkali metal hydroxide salts, examples include, but are not limited to, lithium hydroxide, sodium hydroxide and potassium hydroxide. As the alkaline earth metal hydroxide salts, examples include, but are not limited to, barium hydroxide and calcium hydroxide.

The water-soluble polyvalent metal salt may be a water-soluble polyvalent metal salt other than compounds corresponding to the above-mentioned alkaline earth metal hydroxide salts. As the polyvalent metal salt, examples include, but are not limited to, magnesium metal salts such as magnesium chloride, magnesium phosphate and magnesium sulfate; calcium metal salts such as calcium chloride, calcium nitrate, calcium acetate and calcium sulfate; aluminum metal salts such as aluminum chloride and aluminum sulfate; barium salts such as barium chloride, barium nitrate and barium acetate; and zinc salts such as zinc chloride, zinc nitrate and zinc acetate. Among them, magnesium metal salts, calcium metal salts and aluminum metal salts are preferred; magnesium metal salts are more preferred; and magnesium chloride is particularly preferred.

The method for reacting the water-soluble polyvalent metal salt with the at least one selected from alkali metal hydroxide salts and alkaline earth metal hydroxide salts in the aqueous medium, is not particularly limited. As the method, examples include, but are not limited to, mixing an aqueous solution of the water-soluble polyvalent metal salt and an aqueous solution of the at least one selected from alkali metal hydroxide salts and alkaline earth metal hydroxide salts.

The content of the dispersion stabilizer is not particularly limited. With respect to the total mass (100 parts by mass) of the polymerizable monomer and the hydrophobic solvent, the content of the dispersion stabilizer is preferably from 0.5 parts by mass to 10 parts by mass, and more preferably from 1.0 part by mass to 8.0 parts by mass. When the content of the dispersion stabilizer is equal to or more than the lower limit value, the droplets of the monomer composition can be sufficiently dispersed in the suspension so that they do not join together. On the other hand, when the content of the dispersion stabilizer is equal to or less than the upper limit value, an increase in the viscosity of the suspension is prevented in the formation of the droplets, and a problem such that a droplet forming machine is clogged with the suspension, can be avoided.

With respect to 100 parts by mass of the aqueous medium, the content of the dispersion stabilizer is generally 2 parts by mass or more and 15 parts by mass or less, and preferably 3 parts by mass or more and 8 parts by mass or less.

(E) Aqueous medium

In the present disclosure, the term "aqueous medium" means a medium selected from the group consisting of water, a hydrophilic solvent and a mixture thereof.

The hydrophilic solvent in the present disclosure is not particularly limited, as long as it is one that mixes with water sufficiently and does not develop phase separation. Examples of the hydrophilic solvent include alcohols such as methanol and ethanol; tetrahydrofuran (THF); and dimethyl sulfoxide (DMSO).

Among the aqueous media, water is preferably used in terms of its high polarity. From the viewpoint of decreasing the content of the metal in the shell, the water is preferably ion-exchanged water.

When a mixture of water and a hydrophilic solvent is used, from the viewpoint of forming the droplets of the monomer composition, it is important that the polarity of the entire mixture is not too low. In this case, for example, the mass ratio between water and the hydrophilic solvent (water : hydrophilic solvent) may be set to 99:1 to 50:50.

(F) Other materials

The mixture liquid may further contain other materials that are different from the above-mentioned materials (A) to (E), to the extent that does not impair the effects of the present disclosure.

As another material, the mixture liquid may contain a polar component. When the mixture liquid contains the polar component, hollow particles having a high void ratio and excellent pressure resistance can be easily obtained.

As the polar component, for example, an organic acid, a metal salt thereof, or the below-described polar resin may be used.

In the present disclosure, the polar resin is a polymer containing a repeating unit which contains a heteroatom. As the polar resin, examples include, but are not limited to, an acrylic resin, a polyester resin, and a vinyl resin containing a heteroatom.

In general, the polar resin has a water solubility of less than 1 g/L. In the present disclosure, the polar resin is distinguished from the surfactant in that it is water-insoluble.

The polar resin may be a homopolymer or copolymer of a heteroatom-containing monomer, or it may be a copolymer of a heteroatom-containing monomer and a heteroatom-free monomer. When the polar resin is a copolymer of a heteroatom-containing monomer and a heteroatom-free monomer, from the viewpoint of easily controlling the particle diameter of the hollow particles, in 100% by mass of all the repeating units constituting the copolymer, the amount of the heteroatom-containing monomer unit is preferably 50% by mass or more, more preferably 70% by mass or more, and still more preferably 90% by mass or more.

The number average molecular weight (Mn) of the polar resin is not particularly limited. The polystyrene equivalent number average molecular weight (Mn) of the polar resin measured by gel permeation chromatography (GPC) using tetrahydrofuran is preferably in a range of 3000 or more and 20000 or less, more preferably in a range of 4000 or more and 17000 or less, and still more preferably in a range of 6000 or more and 15000 or less. When the number average molecular weight (Mn) of the polar resin is equal to or more than the lower limit value, the solubility of the polar resin is increased, and the particle diameter of the hollow particles can be easily controlled. When the number average molecular weight of the polar resin is equal to or less than the upper limit value, a decrease in the strength of the shell can be suppressed.

In the case of using the polar resin as the polar component, with respect to 100 parts by mass of the polymerizable monomer, the content of the polar resin is preferably 0.1 parts by mass or more and 10.0 parts by mass or less, more preferably 0.3 parts by mass or more and 8.0 parts by mass or less, and still more preferably 0.5 parts by mass or more and 8.0 parts by mass or less. When the content of the polar resin is equal to or more than the lower limit, the thickness of the shell of the hollow particles is easily controlled. When the content of the polar resin is equal to or less than the upper limit, a decrease in the ratio of the content of the polymerizable monomer can be suppressed. Accordingly, a decrease in the strength of the shell can be suppressed.

As the organic acid, examples include a rosin acid and a higher fatty acid. As the higher fatty acid, examples include higher fatty acids containing 10 to 25 carbon atoms from which the carbon atom of the carboxyl group is excluded.

As the metal used in the metal salt of the organic acid, examples include, but are not limited to, an alkali metal such as Li, Na and K, and an alkaline-earth metal such as Mg and Ca. Of them, an alkali metal is preferred, and at least one selected from Li, Na and K is more preferred.

When the organic acid or metal salt thereof is used as the polar component, the total content of the organic acid and metal salt thereof is preferably 0.0001 parts by mass or more and 0.02 parts by mass or less, more preferably 0.001 parts by mass or more and 0.01 parts by mass or less, and still more preferably 0.0015 parts by mass or more and 0.006 parts by mass or less, with respect to the total (100 parts by mass) of the polymerizable monomer and the hydrophobic solvent. When the content of the organic acid or metal salt thereof is equal to or more than the lower limit value, the thickness of the shell of the hollow particles can be easily controlled. When the content of the organic acid or metal salt thereof is equal to or less than the upper limit value, a decrease in the content of the polymerizable monomer can be suppressed. Accordingly, a decrease in the strength of the shell can be suppressed, and a decrease in the pressure resistance of the hollow particles can be suppressed.

The mixture liquid is obtained by mixing the above-mentioned materials and other materials as needed, appropriately stirring the mixture, etc. In the mixture liquid, an oil phase containing the lipophilic materials such as (A) the polymerizable monomer, (B) the hydrophobic solvent and (C) the polymerization initiator is dispersed with a size of a particle diameter of approximately several millimeters in an aqueous phase containing (D) the dispersion stabilizer, (E) the aqueous medium, etc. The dispersion state of these materials in the mixture liquid can be observed with the naked eye, depending on the types of the materials.

In the mixture liquid preparation step, the mixture liquid may be obtained by simply mixing the above-mentioned materials and other materials as needed, appropriately stirring the mixture, etc. From the point of view that the shell can be easily uniform, it is preferable to prepare the mixture liquid by separately preparing the oil phase containing the polymerizable monomer, the hydrophobic solvent and the polymerization initiator with the aqueous phase containing the dispersion stabilizer and the aqueous medium in advance, and then mixing the phases together. In the present disclosure, a colloidal dispersion in which a sparingly water-soluble inorganic dispersion stabilizer is dispersed in the form of colloidal particles in the aqueous medium, can be preferably used as the aqueous phase.

As just described, by separately preparing the oil phase and the aqueous phase in advance and then mixing them, hollow particles such that the composition of the shell portion is uniform, can be produced.

(2) Suspension step

The suspension step includes suspending the mixture liquid to prepare the suspension in which the droplets of the monomer composition containing the hydrophobic solvent are dispersed in the aqueous medium.

The suspension method for forming the droplets of the monomer composition is not particularly limited. For example, it is performed using an apparatus capable of performing strong stirring, such as an (in-line type) emulsifying disperser (e.g., a horizontal in-line type disperser such as MILDER (product name, manufactured by Pacific Machinery & Engineering Co., Ltd.) and CAVITRON (product name, manufactured by EUROTEC, Ltd.) and a vertical in-line type disperser such as DRS 2000/5 (product name, manufactured by IKA Works, Inc.)) and a high-speed emulsifying disperser such as T.K. HOMOMIXER MARK II (product name, manufactured by PRIMIX Corporation).

In the suspension prepared in the suspension step, the droplets of the monomer composition containing the lipophilic materials mentioned above and having a particle diameter of approximately from 10 um to 50 um, are dispersed uniformly in the aqueous medium. Such droplets of the monomer composition are difficult to observe with the naked eye and can be observed with a known observation instrument such as an optical microscope.

In the suspension step, since phase separation occurs in the droplets of the monomer composition, the hydrophobic solvent with low polarity is likely to collect in the interior of the droplets. As a result, in the obtained droplets, the hydrophobic solvent is distributed in the interior thereof, and the material other than the hydrophobic solvent, such as the polymerizable monomer, is distributed at the periphery thereof.

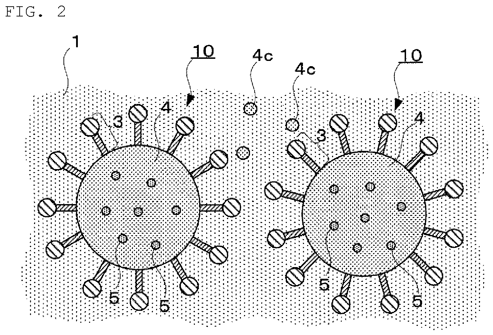

FIG. 2 is a schematic diagram showing an embodiment of the suspension in the suspension step. Each droplet 10 of the monomer composition in FIG. 2 schematically shows a cross section thereof. FIG. 2 is merely a schematic diagram, and the suspension in the present disclosure is not limited to that shown in FIG. 2. A part of FIG. 2 corresponds to the diagram (2) of FIG. 1 described above.

FIG. 2 shows a state where the droplets 10 of the monomer composition and the polymerizable monomer 4c dispersed in the aqueous medium 1, are dispersed in the aqueous medium 1. Each droplet 10 is formed by the oil-soluble monomer composition 4 and a dispersion stabilizer 3 surrounding the periphery of the oil-soluble monomer composition 4.

The monomer composition 4 contains the oil-soluble polymerization initiator 5, the polymerizable monomer and the hydrophobic solvent (none of them is illustrated).

Each droplet 10 is a minute oil droplet which contains the monomer composition 4, and the oil-soluble polymerization initiator 5 generates polymerization initiating radicals in the interior of the minute oil droplet. Therefore, the precursor particles with a target particle diameter can be produced without excessively growing the minute oil droplet.

In such a suspension polymerization method using the oil-soluble polymerization initiator, there is no opportunity for the polymerization initiator to come into contact with the polymerizable monomer 4c dispersed in the aqueous medium 1. Thus, the subgeneration of surplus resin particles (e.g., solid particles having a relatively small particle diameter) in addition to the target resin particles having the hollow portion, can be suppressed by using the oil-soluble polymerization initiator.

(3) Polymerization step

The polymerization step includes subjecting the suspension obtained by the suspension step to a polymerization reaction to prepare a precursor composition containing precursor particles which have a hollow portion surrounded by a shell containing a resin and which include the hydrophobic solvent in the hollow portion. The precursor particles are formed by polymerization of the polymerizable monomer contained in the droplets of the monomer composition. The shell of the precursor particles contains the polymer of the polymerizable monomer as the resin.

The polymerization system is not particularly limited. For example, a batch system, a semicontinuous system or a continuous system may be employed.

The polymerization temperature is preferably from 40°C to 80°C, and more preferably from 50°C to 70°C.

From the viewpoint of suppressing the formation of a dent on the hollow particles, the temperature increase rate up to the polymerization temperature, is preferably 20°C/h or more, and more preferably 45°C/h or more. The temperature increase rate is generally 100°C/h or less.

The polymerization reaction time is preferably from 1 hour to 48 hours, and more preferably from 4 hours to 36 hours.

From the viewpoint of suppressing the formation of a dent on the hollow particles, the speed of stirring the suspension during the polymerization reaction is preferably from 20 rpm to 200 rpm, more preferably from 20 rpm to 100 rpm. When the tetrafunctional or higher-functional crosslinkable monomer is contained as the crosslinkable monomer, the stirring speed is particularly preferably from 20 rpm to 100 rpm.

In the polymerization step, the shell portion of the droplets of the monomer composition, which contain the hydrophobic solvent in the interior, polymerizes. Accordingly, as described above, the hollow portion filled with the hydrophobic solvent is formed in the interior of the obtained precursor particles.

In this step, the second polymerization reaction may be performed by further adding a polymerizable monomer to the precursor composition obtained by the first polymerization reaction performed by subjecting the suspension to the polymerization reaction. As just described, by performing the two-step polymerization reaction in the polymerization step, the solvent resistance of the hollow particles can be increased.

The first polymerization reaction is preferably continued until the polymerization conversion rate of the polymerizable monomer in the suspension reaches preferably 93% by mass or more, more preferably 95% by mass or more, still more preferably 98% by mass or more, and even more preferably 99% by mass or more.

In the present disclosure, the polymerization conversion rate is obtained by the following formula (C) using the mass of the solid component of the particles produced by the first polymerization reaction and contained in the reaction solution just after the first polymerization reaction and the mass of the polymerizable monomer remaining unreacted after the first polymerization reaction. The mass of the unreacted polymerizable monomer can be measured by gas chromatography (GC).

$$\text{Polymerization conversion rate (\% by mass)} = 100 - (\text{Mass of}$$
$$\text{the unreacted polymerizable monomer/Mass of the solid component}$$
$$\text{of the particles produced by the first polymerization}$$
$$\text{reaction}) \times 100 \quad \text{Formula (C)}$$

The polymerization reaction time of the first polymerization reaction is preferably from 0.5 hours to 5 hours, and more preferably from 1 hour to 3 hours.

The polymerizable monomer added for the second polymerization reaction is not particularly limited. From the viewpoint of increasing the solvent resistance and strength of the hollow particles, the polymerizable monomer is preferably a polymerizable monomer having a solubility of 0.3 g/L or more in distilled water at 20°C, and more preferably a non-crosslinkable monomer having a solubility of 0.3 g/L or more in distilled water at 20°C. The polymerizable monomer added for the second polymerization reaction is preferably an (meth)acrylic acid alkyl ester containing an alkyl group having 1 to 5 carbon atoms, a (meth)acrylamide and derivatives thereof, (meth)acrylic acid nitrile, and a polar group-containing non-crosslinkable monomer, for example. The polymerizable monomer is more preferably at least one selected from the group consisting of a (meth)acrylic acid alkyl ester containing an alkyl group having 1 to 5 carbon atoms, and (meth)acrylic acid nitrile. The polymerizable monomer is still more preferably at least one selected from the group consisting of a (meth)acrylic acid alkyl ester containing an alkyl group having 1 to 4 carbon atoms, and acrylic acid nitrile. The polymerizable monomer is even more preferably a (meth)acrylic acid alkyl ester containing an alkyl group having 1 to 4 carbon atoms.

For example, the polar group-containing non-crosslinkable monomer is preferably a non-crosslinkable monomer containing a polar group selected from a carboxyl group, a hydroxyl group, a sulfonic acid group, an amino group, a polyoxyethylene group and an epoxy group. As such a non-crosslinkable monomer, examples include, but are not limited to, a carboxyl group-containing monomer such as an ethylenically unsaturated carboxylic acid monomer such as (meth)acrylic acid, crotonic acid, cinnamic acid, itaconic acid, fumaric acid, maleic acid and butene tricarboxylic acid; a hydroxyl group-containing monomer such as 2-hydroxyethyl (meth)acrylate, 2-hydroxypropyl (meth)acrylate and 4-hydroxybutyl (meth)acrylate; a sulfonic acid group-containing monomer such as styrenesulfonic acid; an amino group-containing monomer such as dimethylaminoethyl (meth)acrylate and diethylaminoethyl (meth)acrylate; a polyoxyethylene group-containing monomer such as methoxypolyethylene glycol (meth)acrylate; and an epoxy group-containing monomer such as glycidyl (meth)acrylate, allyl glycidyl ether and 4-hydroxybutyl acrylate glycidyl ether.

The solubility of the polymerizable monomer, which is added for the second polymerization reaction, in distilled water at 20°C is preferably 2 g/L or more, more preferably 10 g/L or more, and still more preferably 15 g/L or more, due to the following reasons: it becomes easier for the polymerizable monomer to be incorporated in the shell to accelerate the thermal motion of the shell, and the strength of the hollow particles is increased. The upper limit of the solubility of the polymerizable monomer, which is added for the second polymerization reaction, in distilled water at 20°C is not particularly limited, and it is generally 80 g/L or less.

The molecular weight of the polymerizable monomer added for the second polymerization reaction is not particularly limited. From the viewpoint of increasing the solvent resistance and strength of the hollow particles, it is preferably 200 or less, and more preferably 100 or less. The lower limit of the molecular weight is not particularly limited, and it is generally 50 or more.

From the viewpoint of increasing the solvent resistance and strength of the hollow particles, the amount of the polymerizable monomer added for the second polymerization reaction is preferably from 3 parts by mass to 15 parts by mass, and more preferably from 4 parts by mass to 10 parts by mass, with respect to 100 parts by mass of the polymerizable monomer in the mixture liquid.

The polymerization reaction time of the second polymerization reaction is preferably from 1 hour to 6 hours, and more preferably from 2 hours to 4 hours.

(4) Solid-liquid separation step

The solid-liquid separation step includes performing solid-liquid separation of the precursor composition which contains the precursor particles and which is obtained by the above-described polymerization step, to obtain a solid component containing the precursor particles.

The method of performing the solid-liquid separation of the precursor composition is not particularly limited, and a known method may be used. Examples of the solid-liquid separation method include a centrifugation method, a filtration method, and still-standing separation. Among them, a centrifugation method or a filtration method may be employed, and from the viewpoint of simplicity of the operation, a centrifugation method may be employed.

Any step such as a preliminary drying step may be performed at a time after the solid-liquid separation step and before performing the solvent removal step described later. Examples of the preliminary drying step include performing preliminary drying on the solid component obtained after the solid-liquid separation step, by use of a drying apparatus such as a dryer and a drying appliance such as a hand dryer.

(5) Solvent removal step

The solvent removal step includes removing the hydrophobic solvent from the precursor particles obtained by the solid-liquid separation step.

By removing the hydrophobic solvent from the precursor particles in a gaseous atmosphere, the hydrophobic solvent in the interior of the precursor particles is substituted with air, and the hollow particles filled with gas are obtained.

In this step, the term "in a gaseous atmosphere" includes "in an environment where no liquid component exists in the outside of the precursor particles" and "in an environment where only a very small amount of liquid component at a level that does not influence the removal of the hydrophobic solvent, exists in the outside of the precursor particles" in a strict sense. The term "in a gaseous atmosphere" can be reworded as a state where the precursor particles do not exist in a slurry, or it can be reworded as a state where the precursor particles exist in a dry powder. That is, in this step, it is important to remove the hydrophobic solvent in an environment where the precursor particles come into direct contact with the outside gas.

The method of removing the hydrophobic solvent from the precursor particles in a gaseous atmosphere, is not particularly limited, and a known method may be employed. Examples of the method include a reduced pressure drying method, a heat drying method, a flash drying method, and a combination of these methods.

Especially, in the case of using the heat drying method, the heating temperature needs to be set to more than or equal to the boiling point of the hydrophobic solvent and less than or equal to the highest temperature at which the shell structure of the precursor particles does not collapse. Accordingly, depending on the composition of the shell and the type of the hydrophobic solvent in the precursor particles, the heating temperature may be from 50°C to 200°C, may be from 70°C to 200°C, or may be from 100°C to 200°C, for example.

The hydrophobic solvent in the interior of the precursor particles is substituted with the outside gas by the drying operation in the gaseous atmosphere. As a result, the hollow particles in which the hollow portion is occupied by gas, are obtained.

The drying atmosphere is not particularly limited and may be appropriately selected depending on the intended application of the hollow particles. Possible examples of the drying atmosphere include air, oxygen, nitrogen and argon. Further, by filling the interior of the hollow particles with gas once and then performing reduced pressure drying, hollow particles in which the interior is evacuated are also temporarily obtained.

As another method, the hydrophobic solvent may be removed as follows: the precursor composition obtained in the polymerization step, which is in the form of slurry, is not subjected to solid-liquid separation and, instead, in the slurry containing the precursor particles and the aqueous medium, the hydrophobic solvent included in the precursor particles is substituted with the aqueous medium of the slurry, thereby removing the hydrophobic solvent.

In this method, at a temperature equal to or more than the temperature obtained by subtracting 35°C from the boiling point of the hydrophobic solvent, an inert gas is bubbled into the precursor composition. Accordingly, the hydrophobic solvent can be removed from the precursor particles.

When the hydrophobic solvent is a mixed solvent containing several kinds of hydrophobic solvents and it has several boiling points, the boiling point of the hydrophobic solvent in the solvent removal step is determined as the boiling point of the solvent having the highest boiling point among the solvents contained in the mixed solvent, that is, the highest boiling point of the several boiling points.

The temperature at the time of bubbling the inert gas into the precursor composition, is preferably a temperature equal to or more than the temperature obtained by subtracting 30°C from the boiling point of the hydrophobic solvent, and more preferably a temperature equal to or more than the temperature obtained by subtracting 20°C from the boiling point of the hydrophobic solvent, from the viewpoint of reducing the amount of the residual hydrophobic solvent in the hollow particles. The temperature at the time of bubbling is generally set to a temperature equal to or more than the polymerization temperature of the polymerization step. The temperature at the time of bubbling is not particularly limited, and it may be 50°C or more and 100°C or less.

The inert gas used for the bubbling is not particularly limited. As the inert gas, examples include, but are not limited to, nitrogen and argon.

Depending on the type and amount of the hydrophobic solvent, the bubbling condition is appropriately controlled so that the hydrophobic solvent can be removed from the precursor particles. The bubbling condition is not particularly limited. For example, the inert gas may be bubbled in an amount of 1 L/min to 3 L/min for 1 hour to 10 hours.

By this method, an aqueous slurry is obtained, in which the aqueous medium is included in the precursor particles. The slurry is subjected to solid-liquid separation to obtain hollow particles, and the aqueous medium is removed from the hollow particles, thereby obtaining the hollow particles in which the hollow portion is occupied by gas.

The method for obtaining the hollow particles in which the hollow portion is filled with gas, by subjecting the precursor composition in the form of slurry to solid-liquid separation and then removing the hydrophobic solvent from the precursor particles in the gaseous atmosphere, is compared to the method for obtaining the hollow particles in which the hollow portion is filled with gas, by substituting, in the slurry containing the precursor particles and the aqueous medium, the hydrophobic solvent included in the precursor particles with the aqueous medium of the slurry, subjecting the slurry to solid-liquid separation, and then removing the aqueous medium from the precursor particles in the gaseous atmosphere. As a result, the former method is advantageous in that the hollow particles are less likely to collapse in the hydrophobic solvent removal step, and the latter method is advantageous in that the amount of the residual hydrophobic solvent is decreased by bubbling the inert gas.

Also, a hydrophobic organic solvent included in the precursor particles may be removed therefrom after the polymerization step and before the solid-liquid separation step, without the solid-liquid separation of the slurry precursor composition obtained in the polymerization step, by use of the following method, for example: evaporating the hydrophobic organic solvent included in the precursor particles from the precursor composition at a predetermined pressure (a high, normal or reduced pressure), or evaporating the hydrophobic organic solvent included in the precursor particles from the precursor composition by introducing water vapor or inert gas such as nitrogen, argon and helium to the precursor composition at a predetermined pressure (a high, normal or reduced pressure).

(6) Others

In addition to the steps (1) to (5) mentioned above, the following washing step (6-a) and the following hollow portion re-substitution step (6-b) may be added, for example.

(6-a) Washing step

The washing step includes carrying out washing by adding acid or alkali, for removal of the dispersion stabilizer remaining in the precursor composition containing the precursor particles before the solid-liquid separation step. When the dispersion stabilizer used is an acid-soluble inorganic dispersion stabilizer, washing is preferably carried out by adding acid to the precursor composition containing the precursor particles. When the dispersion stabilizer used is an alkali-soluble inorganic compound, washing is preferably carried out by adding alkali to the precursor composition containing the precursor particles.

When the acid-soluble inorganic dispersion stabilizer is used as the dispersion stabilizer, the pH of the precursor composition is preferably controlled to 6.5 or less, and more preferably 6 or less, by adding acid to the precursor composition containing the precursor particles. As the added acid, an inorganic acid such as sulfuric acid, hydrochloric acid and nitric acid or an organic acid such as formic acid and acetic acid may be used. Of them, sulfuric acid is particularly preferred, due to its high dispersion stabilizer removal efficiency and small influence on production equipment.

(6-b) Hollow portion re-substitution step

The hollow portion re-substitution step includes resubstituting the gas or liquid in the interior of the hollow particles with another gas or liquid. By such substitution, the environment of the interior of the hollow particles can be changed; molecules can be selectively confined in the interior of the hollow particles; or the chemical structure of the interior of the hollow particles can be modified in accordance with the intended application thereof.

3. Applications of hollow particles

Due to having excellent pressure resistance, the hollow particles of the present disclosure are less likely to collapse when mixed and kneaded with other materials and even when molded after mixing and kneading with other materials. When they are added to a molded body, they exert excellent effects as a weight reducing material, a heat insulation material, an acoustic insulation material, a damping material and so on. Accordingly, the hollow particles of the present disclosure are particularly suitable as an additive for molded bodies. The hollow particles of the present disclosure are less likely to collapse even when kneaded with a resin and even when molded into a molded body after kneading with a resin. Accordingly, the hollow particles are particularly suitably used as an additive for molded bodies made of resin.

The molded body containing the hollow particles of the present disclosure may contain, as the resin, thermoplastic, thermosetting or room temperature curable resin such as polyethylene, polypropylene, polyvinyl chloride, polystyrene, polyurethane, epoxy resin, acrylonitrile-butadiene-styrene (ABS) resin, acrylonitrile-styrene (AS) resin, poly(meth)acrylate, polycarbonate, polyamide, polyimide, polyphenylene ether, polyphenylene sulfide, polyester, polytetrafluoroethylene, maleimide resin, bismaleimide triazine resin, liquid crystalline polyester resin, phenolic resin, vinyl ester resin, unsaturated polyester resin, cyanate ester resin, polyetherketoneketone resin and polyetherimide resin. The resin may be a resin that is used in combination with an additive for curing the resin, such as a curing agent and a curing catalyst. The curing agent and the curing catalyst may be appropriately selected from known curing agents and catalysts, depending on the type of the resin. As the curing agent and the curing catalyst, examples include, but are not limited to, an amine, an acid anhydride, an imidazole, a thiol, a phenol, a naphthol, a benzoxazine, a cyanate ester and a carbodiimide.

The molded body containing the hollow particles of the present disclosure may contain a thermoplastic elastomer as the resin. As the thermoplastic elastomer, a thermoplastic elastic polymer that is conventionally used as a molding resin, may be used, such as urethane-based elastomer, styrene-based elastomer, olefin-based elastomer, amide-based elastomer and ester-based elastomer. The thermoplastic elastomer is an elastomer having the following properties: it shows rubber elasticity at ordinary temperature (25°C) and it can be plasticized and molded at high temperature.

Also, the molded body containing the hollow particles of the present disclosure is not limited to a resin molded body. For example, it may be a rubber molded body or a molded body containing a mixture of a resin and a rubber. The molded body containing the hollow particles of the present disclosure may contain a rubber such as a natural rubber (NR), an isoprene rubber (IR), a butadiene rubber (BR), a styrene-butadiene copolymer rubber (SBR), an acrylonitrile-butadiene copolymer rubber (NBR) and an ethylene-propylene-diene terpolymer (EPDM). These rubbers may be used alone or in combination of two or more.

The molded body containing the hollow particles of the present disclosure may further contain organic or inorganic reinforced fibers such as carbon fibers, glass fibers, aramid fibers and polyethylene fibers. The hollow particles of the present disclosure can be contained as a filler in a molded body formed by use of a rubber or a thermoplastic or thermosetting resin and in a reinforced fiber molded body formed by use of reinforced fibers and a rubber or a thermoplastic or thermosetting resin.

As the applications of the molded body made of a resin or rubber containing the hollow particles of the present disclosure, examples include, but are not limited to, members such as a light reflective material, a heat insulation material, a sound insulation material and a low dielectric material, which are used in various kinds of fields such as the automotive field, the electronic field, the electric field, the architecture field, the aviation field and the space field; food containers; footwears such as sports shoes and sandals; components of household appliances; components of bicycles; stationery supplies; tools; and the filament of 3D printers.

The hollow particles of the present disclosure, which have a volume average particle diameter of from 10 to 50 um, especially excel in pressure resistance. Accordingly, they can be suitably used as an additive for molded bodies that are obtained through a process in which external pressure is applied, such as mixing, kneading and injection molding.

The hollow particles of the present disclosure have a high void ratio, are less likely to collapse, and also excel in heat resistance. Accordingly, the hollow particles have heat insulation properties and shock-absorbing properties (cushioning properties) required of an under-coating material, and they also have heat resistance in line with thermal paper uses. Further, the hollow particles of the present disclosure are useful as a plastic pigment that is excellent in gloss, hiding power, etc.

A useful component such as a perfume, a medicine, an agricultural chemical and an ink component can be enclosed in the interior of the hollow particles of the present disclosure by a means such as immersion treatment or depressurized or pressurized immersion treatment. Accordingly, the hollow particles in which such a useful component is enclosed, can be used for various applications in accordance with the component contained in the interior.

Examples

Hereinbelow, the present disclosure is described more specifically using examples and comparative examples. However, the present disclosure is not limited to these examples. Also, "part(s)" and "%" are on a mass basis unless otherwise specified.

[Example 1]

(1) Mixture liquid preparation step

First, the following materials were mixed to produce an oil phase.

Ethylene glycol dimethacrylate: 70 parts
Trimethylolpropane trimethacrylate: 30 parts
2,2'-Azobis(2,4-dimethylvaleronitrile) (an oil-soluble polymerization initiator manufactured by Wako Pure Chemical Industries, Ltd., product name: V-65): 3 parts
Rosin acid: 0.007 parts
Cyclohexane (131 parts) and toluene (56 parts) as the hydrophobic solvent

Next, in a stirring tank, under a room temperature condition, an aqueous solution in which 12.1 parts of sodium hydroxide (an alkali metal hydroxide) was dissolved in 121 parts of ion-exchanged water, was gradually added under stirring to an aqueous solution in which 17.1 parts of magnesium chloride (a water-soluble polyvalent metal salt) was dissolved in 494 parts of ion-exchanged water, thereby preparing a magnesium hydroxide colloidal dispersion (a sparingly water-soluble metal hydroxide colloidal dispersion) (magnesium hydroxide: 4 parts). The obtained dispersion was used as an aqueous phase.

The obtained aqueous phase and oil phase were mixed, thereby preparing a mixture liquid.

(2) Suspension step

The mixture liquid obtained in the mixture liquid preparation step was stirred with a disperser (product name: HOMO MIXER, manufactured by: PRIMIX Corporation) for one minute at a rotational frequency of 4,000 rpm to be suspended, thereby preparing a suspension in which droplets of a monomer composition including the hydrophobic solvent, were dispersed in water.

(3) Polymerization step

In a nitrogen atmosphere, the temperature of the suspension obtained in the suspension step was increased from 40°C to 65°C for 30 minutes (temperature increase rate: 50°C/h), and then the suspension was stirred for one and a half hours at a stirring speed of 100 rpm in a temperature condition of 65°C, thereby performing the first polymerization reaction. The polymerization conversion rate at the point of the end of the first polymerization reaction, was 99.2% by mass. Then, 5 parts of methyl acrylate was added to the stirring tank, and in a nitrogen atmosphere, they were stirred for two and a half hours at a stirring speed of 100 rpm in a temperature condition of 65°C, thereby performing the second polymerization reaction. By the second polymerization reaction, the precursor composition containing the precursor particles including the hydrophobic solvent, was obtained.

(4) Washing step and solid-liquid separation step

The precursor composition was washed (25°C, 10 minutes) with dilute sulfuric acid to bring the pH of the composition to 5.5 or less. Next, water was separated therefrom by filtration. Then, 200 parts of ion-exchanged water was added to the resultant to make a slurry again, and a water washing treatment (washing, filtration and dehydration) was repeatedly performed several times at room temperature (25°C). The resultant was separated by filtration, thereby obtaining a solid component. The obtained solid component was dried with a dryer at a temperature of 40°C, thereby obtaining the precursor particles including the hydrophobic solvent.

(5) Solvent removal step

The precursor particles obtained in the solid-liquid separation step were subjected to heating treatment for 6 hours with a vacuum dryer in a vacuum condition at 200°C, thereby removing the hydrophobic solvent from the particles. Accordingly, the hollow particles of Example 1 were obtained. From the scanning electron microscopy observation result and void ratio value of the obtained hollow particles, the particles were confirmed to be spherical and to have a hollow portion.

[Example 2]

The hollow particles of Example 2 were produced in the same manner as Example 1, except that in "(1) Mixture liquid preparation step", the type and amount of the polymerizable monomer added to the oil phase were changed as shown in Table 1.

[Example 3]

The hollow particles of Example 3 were produced in the same manner as Example 1, except that in "(1) Mixture liquid preparation step", the type and amount of the hydrophobic solvent were changed as shown in Table 1.

[Example 4]

The hollow particles of Example 4 were produced in the same manner as Example 2, except that in "(3) Polymerization step", only the first polymerization reaction was performed, and neither the addition of methyl acrylate nor the second polymerization reaction were performed.

[Comparative Examples 1, 3 to 7]

The hollow particles of Comparative Examples 1, 3 to 7 were produced in the same manner as Example 1, except that in "(1) Mixture liquid preparation step", the type and amount of the polymerizable monomer added to the oil phase were changed as shown in Table 1, and the type and amount of the hydrophobic solvent were changed as shown in Table 1.

[Comparative Example 2]

(1) Mixture liquid preparation step

First, the following materials were mixed to produce an oil phase.

Methacrylic acid: 5 parts
Ethylene glycol dimethacrylate: 65 parts
Trimethylolpropane trimethacrylate: 30 parts
2,2'-Azobis(2,4-dimethylvaleronitrile) (an oil-soluble polymerization initiator manufactured by Wako Pure Chemical Industries, Ltd., product name: V-65): 3 parts

Rosin acid: 0.007 parts
Cyclohexane: 187 parts

Next, in a stirring tank, under a room temperature condition, 3 parts of a surfactant (sodium dodecylbenzene sulfonate) was added to 1160 parts of ion-exchanged water, thereby obtaining an aqueous phase.

The obtained aqueous phase and oil phase were mixed, thereby preparing a mixture liquid.

(2) Suspension step

The mixture liquid obtained in the mixture liquid preparation step was stirred with a disperser (product name: HOMO MIXER, manufactured by: PRIMIX Corporation) for one minute at a rotational frequency of 4,000 rpm to be suspended, thereby preparing a suspension in which droplets of a monomer composition including cyclohexane, were dispersed in water.

(3) Polymerization step

In a nitrogen atmosphere, the temperature of the suspension obtained in the suspension step was increased from 40°C to 65°C for 30 minutes (temperature increase rate: 50°C/h), and then the suspension was stirred for 4 hours at a stirring speed of 100 rpm in a temperature condition of 65°C, thereby performing the polymerization reaction. By the polymerization reaction, the precursor composition containing precursor particles including cyclohexane, was obtained.

(4) Washing step and solid-liquid separation step

Water was separated from the precursor composition by filtration. Then, 200 parts of ion-exchanged water was added to the resultant to make a slurry again, and a water washing treatment (washing, filtration and dehydration) was repeatedly performed several times at room temperature (25°C). The resultant was separated by filtration, thereby obtaining a solid component. The obtained solid component was dried with a dryer at a temperature of 40°C, thereby obtaining the precursor particles including cyclohexane.

(5) Solvent removal step

The precursor particles obtained in the solid-liquid separation step were subjected to heating treatment for 6 hours with a vacuum dryer in a vacuum condition at 200°C, thereby removing the cyclohexane from the particles. Accordingly, the hollow particles of Comparative Example 2 were obtained. From the scanning electron microscopy observation result and void ratio value of the obtained hollow particles, the particles were confirmed to be spherical and to have a hollow portion.

[Comparative Example 8]

The hollow particles of Comparative Example 8 were produced in the same manner as Example 1, except that in "(1) Mixture liquid preparation step", the type and amount of the polymerizable monomer added to the oil phase were changed as shown in Table 1; the type and amount of the hydrophobic solvent were changed as shown in Table 1; and in "(3) Polymerization step", the temperature increase rate from 40°C to 65°C and the stirring speed during the first and second polymerization reactions were changed as shown in Table 1.

[Table 1]

EP 4 299 639 A1

Table 1

| First polymerization reaction | | | Example 1 | Example 2 | Example 3 | Example 4 |
|---|---|---|---|---|---|---|
| | Non-crosslinkable monomer | Methacrylic acid (Parts) | | | | |
| | | Methyl methacrylate (Parts) | | | | |
| | Crosslinkable monomer | Ethylene glycol dimethacrylate (Parts) | 70 | 80 | 70 | 80 |
| | | Pentaerythritol tetraacrylate (Parts) | | 20 | | 20 |
| | | Trimethylolpropane trimethacrylate (Parts) | 30 | | 30 | |
| | Oil-soluble polymerization initiator (Parts) | | 3 | 3 | 3 | 3 |
| | Hydrophobic solvent | Cyclohexane (Parts) | 84 | 84 | 120 | 84 |
| | | Toluene (Parts) | 36 | 36 | | 36 |
| | HSP distance between crosslinkable monomer and hydrophobic solvent | | 5.49 | 6.35 | 5.99 | 6.35 |
| | Additive | Rosin acid (Parts) | 0.007 | 0.007 | 0.007 | 0.007 |
| | Dispersion stabilizer | Magnesium hydroxide (Parts) | 4 | 4 | 4 | 4 |
| | | Surfactant (Parts) | | | | |
| | Ion-exchanged water (Parts) | | 615 | 615 | 615 | 615 |
| | Temperature increase rate (°C/h) during polymerization reaction | | 50 | 50 | 50 | 50 |
| | Stirring speed (rpm) during polymerization reaction | | 100 | 100 | 100 | 100 |

(continued)

| | | | Example 1 | Example 2 | Example 3 | Example 4 |
|---|---|---|---|---|---|---|
| Second Polymerization reaction | Non-crosslinkable monomer | Methyl acrylate (Parts) | 5 | 5 | 5 | - |
| | Stirring speed (rpm) during polymerization reaction | | 100 | 100 | 100 | - |

(continued)

| First polymerization reaction | | | Comp. Example 1 | Comp. Example 2 | Comp. Example 3 | Comp. Example 4 | Comp. Example 5 | Comp. Example 6 | Comp. Example 7 | Comp. Example 8 |
|---|---|---|---|---|---|---|---|---|---|---|
| | Non-crosslinkable monomer | Methacrylic acid (Parts) | | 5 | 40 | | | | | |
| | | Methyl methacrylate (Parts) | | 65 | | | | | | |
| | Crosslinkable monomer | Ethylene glycol dimethacrylate (Parts) | 60 | | 40 | 60 | | 100 | 80 | 80 |
| | | Pentaerythritol tetraacrylate (Parts) | 40 | | 20 | 40 | | | 20 | 20 |
| | | Trimethylolpropane trimethacrylate (Parts) | | 30 | | | 100 | | | |
| | Oil-soluble polymerization initiator (Parts) | | 3 | 3 | 3 | 3 | 3 | 3 | 3 | 3 |
| | Hydrophobic solvent | Cyclohexane (Parts) | 120 | 120 | 120 | 158 | 120 | 120 | 120 | 120 |
| | | Toluene (Parts) | | | | | | | | |
| | HSP distance between crosslinkable monomer and hydrophobic solvent | | 6.82 | 6.17 | 7.39 | 6.82 | 3.93 | 6.89 | 6.84 | 6.84 |
| | Additive | Rosin acid (Parts) | 0.007 | 0.007 | 0.007 | 0.007 | 0.007 | 0.007 | 0.007 | 0.007 |
| | Dispersion stabilizer | Magnesium hydroxide (Parts) | 4 | | 4 | 4 | 4 | 4 | 4 | 4 |
| | | Surfactant (Parts) | | 3 | | | | | | |
| | Ion-exchanged water (Parts) | | 615 | 1160 | 615 | 615 | 615 | 615 | 615 | 615 |
| | Temperature increase rate (°C/h) during polymerization reaction | | 50 | 50 | 50 | 50 | 50 | 50 | 50 | 10 |
| | Stirring speed (rpm) during polymerization reaction | | 100 | 100 | 100 | 100 | 100 | 100 | 100 | 300 |

(continued)

| | | | Comp. Example 1 | Comp. Example 2 | Comp. Example 3 | Comp. Example 4 | Comp. Example 5 | Comp. Example 6 | Comp. Example 7 | Comp. Example 8 |
|---|---|---|---|---|---|---|---|---|---|---|
| Second Polymerization reaction | Non-crosslinkable monomer | Methyl acrylate (Parts) | 5 | - | 5 | 5 | 5 | 5 | 5 | 5 |
| | Stirring speed (rpm) during polymerization reaction | | 100 | - | 100 | 100 | 100 | 100 | 100 | 300 |

[Evaluation]

1. Polymerization conversion rate

In the polymerization step of the examples and comparative examples, just after the first polymerization reaction, 50 g of a reaction solution was taken and subjected to pressure filtration, thereby obtaining particles from the reaction solution, which were produced by the first polymerization reaction and contained water and the hydrophobic solvent. The obtained particles were precisely weighed in milligrams. Next, 27 g of ethyl acetate was added to about 3 g of the precisely weighed particles, and they were stirred for 15 minutes. Then, 13 g of methanol was added thereto, and they were mixed for 10 minutes. A solution thus obtained was left to stand to deposit an insoluble component, and the supernatant of the solution was collected as a measurement sample. Next, 2 $\mu$L of the measurement sample was injected into a gas chromatograph, and the amount of the polymerizable monomer in the measurement sample was quantified by gas chromatography (GC) in the following condition. The quantified amount was regarded as the mass of the unreacted polymerizable monomer. Also, the particles which were produced by the first polymerization reaction and obtained by the pressure filtration were dried at 200°C for two hours for removal of the water and the hydrophobic solvent, and the mass of the solid component of the particles was obtained. Then, the polymerization conversion rate was calculated by the following formula (C).

$$\texttt{Polymerization conversion rate (\% by mass) = 100-(Mass of}$$
$$\texttt{the unreacted polymerizable monomer/Mass of the solid component}$$
$$\texttt{of the particles produced by the first polymerization}$$
$$\texttt{reaction)×100 \quad Formula (C)}$$

<Condition of GC>

    Column: TC-WAX (0.25 mm $\times$ 30 m)
Column temperature: 80°C
Injection temperature: 200°C
FID detection side temperature: 200°C

For the hollow particles obtained in the examples and the comparative examples, Table 2 shows the content (% by mass) of each monomer unit in the polymer contained in the shell.
The hollow particles obtained in the examples and the comparative examples were measured and evaluated as follows. The results are shown in Table 2.

2. Volume average particle diameter of hollow particles

The particle diameter of each hollow particle was measured using a laser diffraction particle size distribution measuring apparatus (product name: SALD-2000, manufactured by: Shimadzu Corporation), and the volume average of the particle diameters was calculated and used as the volume average particle diameter.

3. Average circularity

First, 10 mL of ion-exchanged water was poured into a container. As a dispersant, 0.02 g of a surfactant (alkylbenzene sulfonic acid) was added thereto. In addition, 0.02 g of the hollow particles were further added thereto. The mixture was subjected to a dispersion treatment for 3 minutes at 60 W (Watt) with an ultrasonic disperser. The amount of ion-exchanged water was adjusted so that the concentration of the hollow particles was from 3000 particles/$\mu$L to 10,000 particles/$\mu$L, thereby obtaining a measurement sample. Using the obtained measurement sample, a projected image was taken by means of a flow type particle image analyzer (product name: FPIA-2100, manufactured by: Sysmex Corporation) for 5000 hollow particles having a circle equivalent diameter of 0.4 um or more. From the projected image of the particles, the perimeter of a circle having the same area as the projected area of the particle image, and the perimeter of the projected particle image were measured, and the circularity of the hollow particles was obtained by the following calculation formula 1:

Calculation Formula 1

(Circularity) = (Perimeter of the circle having the same area as the projected area of the particle image) / (Perimeter of the projected particle image)

The average of the circularities of the 5000 hollow particles was used as the average circularity.

4. Density and void ratio of hollow particles

4-1. Measurement of apparent density of hollow particles

First, approximately 30 cm$^3$ of the hollow particles were introduced into a measuring flask with a volume of 100 cm3, and the mass of the introduced hollow particles was precisely weighed. Next, the measuring flask in which the hollow particles were introduced, was precisely filled with isopropanol up to the marked line while care was taken so that air bubbles did not get in. The mass of the isopropanol added to the measuring flask was precisely weighed, and the apparent density $D_1$ (g/cm$^3$) of the hollow particles was calculated by the following formula (I).

Apparent density D₁ = [Mass of the hollow particles]/(100-[Mass of the isopropanol]/[Specific gravity of the isopropanol at the measuring temperature])  Formula (I)

4-2. Measurement of true density of hollow particles

The hollow particles were pulverized in advance; approximately 10 g of the pulverized hollow particles were introduced into a measuring flask with a volume of 100 cm$^3$; and the mass of the introduced pulverized particles was precisely weighed.
Then, similarly to the measurement of the apparent density mentioned above, isopropanol was added to the measuring flask; the mass of the isopropanol was precisely weighed; and the true density $D_0$ (g/cm$^3$) of the hollow particles was calculated by the following formula (II).

True density D₀ = [Mass of the pulverized hollow particles]/(100-[Mass of the isopropanol]/[Specific gravity of the isopropanol at the measuring temperature])  Formula (II)

4-3. Calculation of void ratio

The void ratio of the hollow particles was calculated by the following formula (III) from the apparent density $D_1$ and the true density $D_0$.

Void ratio (%) = 100-(Apparent density D₁/True density D₀)×100  Formula (III)

5. Shell thickness of hollow particles

The inner diameter r of the hollow particles was calculated by the following formula (1) using the volume average particle diameter R and void ratio of the hollow particles, and the shell thickness of the hollow particles was calculated by the following formula (2) using the inner diameter r and the volume average particle diameter R.

4/3π×(R/2)³×(Void ratio/100) = 4/3π×(r/2)³  Formula (1)

$$\text{Shell thickness} = (R-r)/2 \quad \text{Formula (2)}$$

6. Percentage of particles having a dent

The hollow particles were photographed by use of a field emission scanning electron microscope (FE-SEM). From the photographed hollow particles, 100 particles were randomly selected. For the selected particles, the diameter of a circle having the same area as the projected area of the particle image, was measured as the diameter of the particles. When the particles had a dent, the distance in the maximum width direction of the dent on the FE-SEM image, was measured as the size of the dent, and then the number of the percentage of particles having a dent with a size of 5% to 50% of the particle diameter, was counted and evaluated by the following evaluation criteria.

(Evaluation criteria)

◎: The percentage of particles having a dent with a size of 5% to 50% of the particle diameter, is less than 5%.
○: The percentage of particles having a dent with a size of 5% to 50% of the particle diameter, is 5% or more and 10% or less.
×: The percentage of particles having a dent with a size of 5% to 50% of the particle diameter, is more than 10%.

7. Residual void ratio in the molded body

First, 10 parts of the hollow particles obtained in any of the above-mentioned examples and comparative examples and, as a thermoplastic resin, 90 parts of polypropylene (manufactured by: Mitsubishi Chemical Corporation, product name: MA1B, specific gravity: 0.90 g/cm$^3$) were mixed by a blender. Next, a resin composition thus obtained was kneaded by a biaxial kneader (product name: TEM-35B, manufactured by: Toshiba Machine Co., Ltd.) in the following kneading condition, extruded and then pelletized, thereby obtaining pellets of the resin composition.

<Kneading condition>

Screw diameter: 37 mm, L/D = 32
Screw rotational frequency: 250 rpm
Resin temperature: 190°C
Feed rate: 20 kg/h

The obtained pellets of the resin composition were dried by heating at 80°C for 6 hours. Then, using an injection molding machine, the dried pellets were molded in the following molding condition, thereby obtaining a molded body (size: 80 mm × 10 mm × 4 mm (thickness)).

<Molding condition>

Cylinder temperature: 230°C
Mold temperature: 40°C
Injection pressure: 70 MPa

The residual void ratio was calculated by the following formula (D) where "a" is the specific gravity of the molded body after injection molding; "b" is the specific gravity (a calculated value) of the molded body with the premise that the voids were maintained; and "c" is the specific gravity (a calculated value) of the molded body with the premise that all the hollow particles collapsed.

$$\text{Residual void ratio (\%)} = \{(c-a)/(c-b)\} \times 100 \quad \text{Formula (D)}$$

The specific gravity of the molded body after the injection molding, was measured by an underwater replacement method in accordance with JIS K 7112.

The specific gravity b of the molded body with the premise that the voids were maintained, was calculated by the following formula (E) where $P_A$ is the amount of the added hollow particles; $P_G$ is the specific gravity of the hollow particles; $R_A$ is the amount of the added thermoplastic resin; and $R_G$ is the specific gravity of the thermoplastic resin.

$$b = 1/\{(P_A/P_G) + (R_A/R_G)\} \quad \text{Formula (E)}$$

The specific gravity c of the molded body with the premise that all the hollow particles collapsed, was calculated by the following formula (F) where $R_A$ is the amount of the added thermoplastic resin; $R_G$ is the specific gravity of the thermoplastic resin; $D_0$ is the true density of the hollow particles; $P_A$ is the amount of the added hollow particles; and $P_V$ is the void ratio (%) of the hollow particles.

$$c = [R_G \times R_A + \{D_0 \times P_A \times (1-P_V/100)\}]/\{R_A + P_A \times (1-P_V/100)\} \quad \text{Formula (F)}$$

[Table 2]

Table 2

| | | Example 1 | Example 2 | Example 3 | Example 4 |
|---|---|---|---|---|---|
| Crosslinkable monomer unit (% by mass) | Ethylene glycol dimethacrylate | 66.7 | 76.2 | 66.7 | 80 |
| | Pentaerythritol tetraacrylate | | 19.0 | | |
| | Trimethylolpropane trimethacrylate | 28.6 | | 28.6 | 20 |
| Non-crosslinkable monomer unit (% by mass) | Methacrylic acid | | | | |
| | Methyl methacrylate | | | | |
| | Methyl acrylate | 4.8 | 4.8 | 4.8 | |
| Properties of hollow particles | Volume average particle diameter ($\mu$m) | 20 | 24 | 10 | 23 |
| | Average circularity | 0.989 | 0.986 | 0.987 | 0.987 |
| | Apparent density $D_1$ (g/cm$^3$) | 0.42 | 0.42 | 0.42 | 0.42 |
| | True density $D_0$ (g/cm$^3$) | 1.20 | 1.20 | 1.20 | 1.20 |
| | Void ratio (%) | 65 | 65 | 65 | 65 |
| | Shell thickness ($\mu$m) | 1.36 | 1.62 | 0.69 | 1.54 |
| | Percentage of particles having a dent | ◎ | ◎ | ◎ | ◎ |
| | Residual void ratio (%) | 99.5 | 99.8 | 98.5 | 96.7 |

(continued)

| | | Comp. Example 1 | Comp. Example 2 | Comp. Example 3 | Comp. Example 4 | Comp. Example 5 | Comp. Example 6 | Comp. Example 7 | Comp. Example 8 |
|---|---|---|---|---|---|---|---|---|---|
| Crosslinkable monomer unit (% by mass) | Ethylene glycol dimethacrylate | 57.1 | 65 | 38.1 | 57.1 | | 95.2 | 76.2 | 76.2 |
| | Pentaerythritol tetraacrylate | 38.1 | | 19.0 | 38.1 | | | 19.0 | 19.0 |
| | Trimethylolpropane trimethacrylate | | 30 | | | 95.2 | | | |
| | Methacrylic acid | | 5 | | | | | | |
| Non-crosslinkable monomer unit (% by mass) | Methyl methacrylate | | | 38.1 | | | | | |
| | Methyl acrylate | 4.8 | | 4.8 | 4.8 | 4.8 | 4.8 | 4.8 | 4.8 |
| | Volume average particle diameter ($\mu$m) | 11 | 3 | 9 | 9 | 7 | 13 | 8 | 9 |
| | Average circularity | 0.974 | 0.975 | 0.982 | 0.980 | 0.981 | 0.984 | 0.982 | 0.983 |
| | Apparent density $D_1$ (g/cm$^3$) | 0.42 | 0.42 | 0.42 | 0.54 | 0.42 | 0.42 | 0.42 | 0.42 |
| Properties of hollow particles | True density $D_0$ (g/cm$^3$) | 1.20 | 1.20 | 1.20 | 1.20 | 1.20 | 1.20 | 1.20 | 1.20 |
| | Void ratio (%) | 65 | 65 | 65 | 55 | 65 | 65 | 65 | 65 |
| | Shell thickness ($\mu$m) | 0.71 | 0.18 | 0.62 | 0.81 | 0.48 | 0.87 | 0.54 | 0.62 |
| | Percentage of particles having a dent | × | ◎ | × | × | ◎ | × | × | × |
| | Residual void ratio (%) | 26.8 | 50.1 | 162 | 60.5 | 20.4 | 12.4 | 37.2 | 5.4 |

[Consideration]

For the hollow particles obtained in Comparative Examples 1, 4, 7 and 8, when observed in plan view, the percentage of particles having a dent with a size of 5% to 50% of the particle diameter, was more than 10%. Accordingly, the residual void ratio in the molded body was low, and the pressure resistance was poor. It is presumed that the pressure resistance of the hollow particles obtained in Comparative Examples 1, 4, 7 and 8 was decreased by the dent.

A comparison between Comparative Examples 1 and 4, which had the same shell composition, showed that the residual void ratio of Comparative Example 1 was lower than that of Comparative Example 4. This is presumed to be because a difference in the shell thickness easily affects the pressure resistance of the particles having a dent with a size of 5% to 50% of the particle diameter. It is presumed that since the shell thickness of the hollow particles obtained in Comparative Example 1 was thin compared to the hollow particles obtained in Comparative Example 4, the pressure resistance of the particles having a dent with a size of 5% to 50% of the particle diameter, further decreased.

For Comparative Example 7, the shell composition was the same as Example 2. However, it is presumed that since the type of the hydrophobic solvent used for the production of the hollow particles was different from Example 2, the dent was formed on the surface of the particles.

For Comparative Example 8, as with Comparative Example 7, the shell composition was the same as Example 2. However, it is considered that since the type of the hydrophobic solvent used for the production of the hollow particles was different from Example 2, and the temperature increase rate and the stirring speed during the polymerization reactions were different from Example 2, the dent was more formed on the surface of the particles than Comparative Example 7, thereby further reducing the residual void ratio in the molded body.

For the hollow particles obtained in Comparative Example 2, since the volume average particle diameter was 3 um, the residual void ratio in the molded body was low, and the pressure resistance was poor. It is presumed that since the volume average particle diameter was small and the shell thickness was thin, the pressure resistance of the hollow particles obtained in Comparative Example 2 was poor.

For the hollow particles obtained in Comparative Example 3, the content of the crosslinkable monomer unit in 100 parts by mass of all monomer units of the polymer contained in the shell, was less than 70 parts by mass and, when observed in plan view, the percentage of particles having a dent with a size of 5% to 50% of the particle diameter, was more than 10%. Accordingly, the residual void ratio in the molded body was low, and the pressure resistance was poor. It is presumed that the pressure resistance of the hollow particles obtained in Comparative Example 3 was poor since the shell strength was insufficient and since the pressure resistance was further decreased by the dent.

For the hollow particles obtained in Comparative Example 5, the residual void ratio in the molded body was low since the crosslinkable monomer unit in the polymer contained in the shell did not contain the bifunctional crosslinkable monomer unit. It is presumed that the residual void ratio was low due to the following reason: in Comparative Example 5, since the shell was formed by using only the trifunctional or higher-functional crosslinkable monomer as the crosslinkable monomer, the hollow particles thus obtained had communication holes, and the resin entered the interior of the particles through the communication holes.

For the hollow particles obtained in Comparative Example 6, the residual void ratio in the molded body was low and the pressure resistance was poor, since the crosslinkable monomer unit in the polymer contained in the shell did not contain the trifunctional or higher-functional crosslinkable monomer unit and, when observed in plan view, the percentage of particles having a dent with a size of 5% to 50% of the particle diameter, was more than 10%. It is presumed that in Comparative Example 6, since the shell was formed by using only the bifunctional crosslinkable monomer as the crosslinkable monomer, the dent was easily formed on the surface of the particles, and the pressure resistance was decreased by the dent.

For the hollow particles obtained in Examples 1 to 4, the volume average particle diameter was from 10 um to 50 um; the content of the crosslinkable monomer unit in 100 parts by mass of all monomer units of the polymer contained in the shell, was 70 parts by mass or more; the crosslinkable monomer unit contained the bifunctional crosslinkable monomer unit and the trifunctional or higher-functional crosslinkable monomer unit; and when observed in plan view, the percentage of particles having a dent with a size of 5% to 50% of the particle diameter, was 10% or less. Accordingly, even though the void ratio was 60% or more and high, the residual void ratio in the molded body was high, and the pressure resistance was excellent.

Reference Signs List

1.  Aqueous medium
2.  Low polarity material
3.  Dispersion stabilizer

4.      Monomer composition
4a.     Hydrophobic solvent
4b.     Material not containing hydrophobic solvent
4c.     Polymerizable monomer dispersed in aqueous medium
5.      Oil-soluble polymerization initiator
6.      Shell
8.      Hollow portion
10.     Droplet
20.     Precursor particle
100.    Hollow particle having a hollow portion filled with gas

**Claims**

1.   Hollow particles which comprise a shell containing a resin and a hollow portion surrounded by the shell,

   wherein a void ratio is 60% or more;
   wherein a volume average particle diameter is from 10 um to 50 um;
   wherein the shell contains, as the resin, a polymer in which from 70 parts by mass to 100 parts by mass of a crosslinkable monomer unit is contained in 100 parts by mass of all monomer units, and the crosslinkable monomer unit contains a bifunctional crosslinkable monomer unit derived from a bifunctional crosslinkable monomer and a trifunctional or higher-functional crosslinkable monomer unit derived from a trifunctional or higher-functional crosslinkable monomer; and
   wherein, when observed in plan view, a percentage of particles having a dent with a size of 5% to 50% of the particle diameter, is 10% or less.

2.   The hollow particles according to Claim 1, wherein a content of the bifunctional crosslinkable monomer unit in 100 parts by mass of all monomer units of the polymer, is from 60 parts by mass to 95 parts by mass.

3.   The hollow particles according to Claim 1 or 2, wherein a content of the trifunctional or higher-functional crosslinkable monomer unit in 100 parts by mass of all monomer units of the polymer, is from 5 parts by mass to 40 parts by mass.

4.   The hollow particles according to any one of Claims 1 to 3, wherein the trifunctional or higher-functional crosslinkable monomer unit is a crosslinkable monomer unit derived from a methacrylic crosslinkable monomer containing, as a polymerizable functional group, a methacryloyl group.

5.   The hollow particles according to any one of Claims 1 to 4, wherein a thickness of the shell is from 0.20 um to 4.00 um.

FIG. 1

FIG. 2

| INTERNATIONAL SEARCH REPORT | International application No. |
| --- | --- |
| | **PCT/JP2022/006639** |

**A.    CLASSIFICATION OF SUBJECT MATTER**

*C08F 220/10*(2006.01)i
FI:   C08F220/10

According to International Patent Classification (IPC) or to both national classification and IPC

**B.    FIELDS SEARCHED**

Minimum documentation searched (classification system followed by classification symbols)

C08F6/00-246/00; 301/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| A | JP 2006-265363 A (SEKISUI CHEM CO LTD) 05 October 2006 (2006-10-05) entire text | 1-5 |
| A | WO 2014/156994 A1 (SEKISUI PLASTICS CO., LTD.) 02 October 2014 (2014-10-02) entire text | 1-5 |
| A | WO 2020/054816 A1 (SEKISUI PLASTICS CO., LTD.) 19 March 2020 (2020-03-19) entire text | 1-5 |
| A | WO 2018/025575 A1 (MATSUMOTO YUSHI SEIYAKU KK) 08 February 2018 (2018-02-08) entire text | 1-5 |
| A | JP 2020-033503 A (MITSUI CHEMICALS INC) 05 March 2020 (2020-03-05) entire text | 1-5 |
| A | WO 2020/066623 A1 (ZEON CORPORATION) 02 April 2020 (2020-04-02) entire text | 1-5 |

☑ Further documents are listed in the continuation of Box C.     ☑ See patent family annex.

| | |
| --- | --- |
| *    Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
| --- | --- |
| **20 April 2022** | **10 May 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

| International application No. |
|---|
| **PCT/JP2022/006639** |

**C.    DOCUMENTS CONSIDERED TO BE RELEVANT**

| Category* | Citation of document, with indication, where appropriate, of the relevant passages | Relevant to claim No. |
|---|---|---|
| P, A | WO 2021/112117 A1 (ZEON CORPORATION) 10 June 2021 (2021-06-10)<br>entire text | 1-5 |

Form PCT/ISA/210 (second sheet) (January 2015)

| | International application No. |
|---|---|
| | **PCT/JP2022/006639** |

| Patent document cited in search report | | | Publication date (day/month/year) | Patent family member(s) | | | Publication date (day/month/year) |
|---|---|---|---|---|---|---|---|
| JP | 2006-265363 | A | 05 October 2006 | US 2008/0269394 A1 entire text US 2012/0178841 A1 WO 2006/100806 A1 EP 1862482 A1 CN 101146835 A KR 10-2007-0121801 A TW 200633949 A | | | |
| WO | 2014/156994 | A1 | 02 October 2014 | US 2016/0053067 A1 entire text EP 2980108 A1 KR 10-2015-0129859 A CN 105246931 A | | | |
| WO | 2020/054816 | A1 | 19 March 2020 | CN 112703212 A KR 10-2021-0052522 A | | | |
| WO | 2018/025575 | A1 | 08 February 2018 | US 2019/0194415 A1 entire text EP 3495396 A1 CN 109476772 A KR 10-2019-0035756 A | | | |
| JP | 2020-033503 | A | 05 March 2020 | JP 6513273 B1 | | | |
| WO | 2020/066623 | A1 | 02 April 2020 | US 2021/0354102 A1 entire text CN 112739455 A KR 10-2021-0063334 A | | | |
| WO | 2021/112117 | A1 | 10 June 2021 | (Family: none) | | | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006089648 A
- WO 201926899 A
- JP 2020033503 A
- JP 2020132820 A

**Non-patent literature cited in the description**

- Chemical Society of Japan. Maruzen Publishing Co, 30 September 1993, 498-503